(19) Europäisches Patentamt / European Patent Office / Office européen des brevets

(11) **EP 2 583 821 A1**

(12) **EUROPEAN PATENT APPLICATION**
published in accordance with Art. 153(4) EPC

(43) Date of publication:
**24.04.2013 Bulletin 2013/17**

(51) Int Cl.:
**B32B 9/00** (2006.01)     **B32B 15/082** (2006.01)
**H05B 33/04** (2006.01)

(21) Application number: **11795642.5**

(22) Date of filing: **09.06.2011**

(86) International application number:
**PCT/JP2011/063286**

(87) International publication number:
**WO 2011/158735 (22.12.2011 Gazette 2011/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2010   JP 2010136212**

(71) Applicants:
• **Daicel Corporation**
  **Osaka-shi, Osaka 530-0001 (JP)**
• **Daicel Value Coating Ltd.**
  **Tokyo 108-8232 (JP)**

(72) Inventors:
• **NAKAMURA Shuji**
  **Himeji-shi**
  **Hyogo 671-1283 (JP)**
• **YANO Yoshimi**
  **Himeji-shi**
  **Hyogo 671-1283 (JP)**
• **NISHIMURA, Kanae**
  **Amagasaki-shi**
  **Hyogo 661-0964 (JP)**

(74) Representative: **Grünecker, Kinkeldey, Stockmair & Schwanhäusser**
**Leopoldstrasse 4**
**80802 München (DE)**

(54) **LAMINATED FILM, MANUFACTURING METHOD FOR SAME, AND ELECTRONIC DEVICE**

(57)     A lamination film for an electronic device, having excellent gas-barrier properties (e.g., barrier properties against water vapor), is provided.

A lamination film 20 comprises, in sequence: a base film 25 comprising a transparent polymer; an anchor layer 24 formed on a first side of the base film, the anchor layer comprising a cured product of a polymerizable composition containing a vinyl monomer and/or prepolymer; a barrier layer 23 comprising a metal or a metal compound; an etching protection layer 22 having an acid resistance or an alkali resistance; and a transparent electroconductive layer 21 comprising an inorganic compound. The vinyl monomer and/or prepolymer contains at least a silicone (meth)acrylate monomer and/or prepolymer. The lamination film 20 may comprise an anti-glare layer 26 formed on a second side of the base film. The lamination film 20 is disposed at a display side with respect to an ink layer of an electronic paper.

Fig. 2

EP 2 583 821 A1

**Description**

TECHNICAL FIELD

The present invention relates to a lamination film (or a multilayer film) which is disposed at a viewing side of an electronic (display) device (such as an electronic paper or an organic electroluminescent (organic EL) display) and a process for producing the film, as well as an electronic device.

BACKGROUND ART

As a type of an electronic device, a personal digital assistance (PDA) provided with a liquid crystal display is now in widespread use. In the PDA, the display is a liquid crystal display, and the mainstream of an input device is a device that is equipped with a touch panel and inputtable with a stylus pen. In the PDA, the liquid crystal display is excellent as a display apparatus, while the liquid crystal display is not a self-luminescent type or a reflected-light type, which causes a problem of too much electricity consumption. In particular, for a PDA made compact for the carrying convenience, a lower electricity consumption is required. For this purpose, electronic devices other than the liquid crystal display have been also reported; an electronic paper and an organic EL device are typical examples of the electronic devices.

The electronic paper usually has a laminated structure comprising a basal plate (or a substrate), an ink layer (a display layer) formed on the basal plate, and a transparent electrode laminated on the ink layer. Recently, as the ink layer, an electronic ink usingaphysical phenomenon such as electrophoresis or magnetophoresis has been developed; the electronic paper improves in characteristics such as visibility or thinness and is rapidly widely used. The function of the electronic ink, however, is easily lowered due to water, and the electronic paper requires barrier properties against water vapor. Further, since the electronic paper, like a paper, is a display using a reflected light, the electronic paper also requires a function of improving the visibility of the display layer so as to widen a viewing angle, be easily viewable and eye-friendly even when exposed to direct sunlight, and reduce a burden on eyes. Thus, in order to achieve the visibility, the electronic paper usually has a layer having an anti-glare function (an anti-glare layer) formed as an outermost layer of a viewing side thereof. Moreover, as described above, the transparent electrode is located at the viewing side, and it is necessary for the transparent electrode to be a film having transparency and conductivity and being capable of forming a circuit. In order to form a circuit in the transparent electrode, a partly masked electroconductive layer comprising an indium tinoxide (ITO) or the like is formed by etching, specifically, an unmasked region of an electroconductive layer is removed and a masked region thereof is left to form a circuit.

In the current technology, the film to be located at the viewing side of the electronic paper has a complicated structure. Specifically, thefilmisobtained by producing (1) an anti-glare layer/a poly(ethylene terephthalate) (PET) (base) film, (2) a PET film having a barrier layer formed by a silicon oxide deposition film, and (3) a PET film having an ITO layer, as the outermost layer, the second outermost layer, and the third outermost layer, respectively, of the viewing side; then bonding the film (1) to the film (2) with an agglutinant; and bonding the film (3) to the resulting layered film. This method needs the bonding steps, which has a low production efficiency. Moreover, it is physically impossible to remove a foreign substance adhering to the bonding face prior to the bonding step with the agglutinant, and the problem with the film is that the foreign substance entered between layers is a defect of the final product.

Meanwhile, for the organic EL device, electrons and electron holes are injected from a cathode and an anode, respectively, by applying a voltage on the cathode and the anode. The light emission principle of the organic EL is as follows: the injected electrons and holes are passed through an electron-transporting layer and a hole-transporting layer, respectively, and are bonded together in a light-emitting (or emissive) layer. In the organic EL, the gradual deterioration of a light-emitting organic material due to electric current and humidity disadvantageously results in the decrease of brightness. Thus, the organic EL device requires barrier properties against water vapor. Further, since it is necessary to dispose an active device such as a TFT (thin film transistor) at each pixel (active matrix driving) and drive the active device, the organic EL device is necessarily a transparent and electroconductive film which can form a circuit. Furthermore, in order to improve the visibility in the organic EL device, it is desirable that an anti-glare layer be formed as the outermost layer of the viewing side of the organic EL device. Moreover, for a PDA provided with the organic EL device, it is desirable that a hardcoat layer standing for input with a stylus pen be formed as the outermost layer of the viewing side of the organic EL device.

A film usable for these electronic devices (in particular, the organic EL device), that is, a film having a high transparency and a high dampproofing property, has not been reported so far.

WO2004/000920 publication (Patent Document 1) discloses a lamination film as a substrate for an EL display, a substrate for an electronic paper, or a substrate for a solar cell, the lamination film comprising, in sequence: a poly (ethylene naphthalate) basal plate; a coat layer comprising apolyester, an acryl polymer and a wetting agent; a hardcoat layer; a barrier layer formed by a silicon oxide deposition film; and a transparent electroconductive layer formed by an ITO deposition film.

Japanese Patent Application Laid-Open Publication No. 2008-33095 (JP-2008-33095A, Patent Document 2) discloses a display apparatus comprising a display panel covered with a gas-barrier member; the display panel comprises a display (such as a liquid crystal display panel, an organic or inorganic EL display panel, or an electronic paper) held between a display drive circuit basal plate and a transparent electrode basal plate. This document discloses, as a preferred gas-barrier film, a lamination product composed of, in sequence, a transparent polymer base, a gas-barrier thin layer consisting of a metal or metal compound, and an organic polymer having gas-barrier properties. Further, this document discloses that, in relation to the gas-barrier properties, the water-vapor permeability measured according to Mocon method under an environment of 40°C and 90%RH is practically preferably not more than 0.3 g/m$^2$/day.

However, the lamination film and the lamination product have insufficient gas-barrier properties. Moreover, as described above, when etching is applied to form a circuit, the barrier layer locating under the ITO layer is damaged by etching, and the lamination film and the lamination product decrease in the gas-barrier properties. Further, since the lamination film and the display apparatus has no anti-glare layer, the lamination film and the display apparatus have sufficient light transmission, while insufficient in visibility due to generation of sparkling or flickering. In addition, covering of the display panel held between the display drive circuit basal plate and the transparent electrode basal plate with the gas-barrier member requires complicated steps.

Japanese Patent Application Laid-Open Publication No. 2007-187746 (JP-2007-187746A, Patent Document 3) discloses an anti-glare film which comprises an anti-glare layer comprising a polymer and having a plurality of domains phase-separated from each other and has an uneven structure between the domains and a matrix, wherein at least one uneven part generated by phase separation is formed within the domains. This document, however, merely discloses one technique of the anti-glare layer, and fails to disclose how a barrier property suitable for a display device is imparted to the film. Moreover, this document is silent on the phenomenon of barrier deterioration due to the damage of the barrier layer, which is a layer locating under ITO, from etching.

RELATED ART DOCUMENTS

PATENT DOCUMENTS

Patent Document 1: WO2004/000920 publication (Claims, Example 5)
Patent Document 2: JP-2008-33095A (Claims, paragraphs [0024] and [0025])
Patent Document 3: JP-2007-187746A (Claims)

SUMMARY OF THE INVENTION

PROBLEMS TO BE SOLVED BY THE INVENTION

It is therefore an object of the present invention to provide a lamination film having excellent gas-barrier properties (for example, barrier properties against water vapor) and a process for producing the film, as well as an electronic device provided with the film.

Another object of the present invention is to provide a lamination film which can prevent deterioration in gas-barrier properties even in an etching treatment with an acid or an alkali and a process for producing the film, as well as an electronic device provided with the film.

It is still another object of the present invention to provide a process for efficiently producing a lamination film having high gas-barrier properties and allowing a sparkling- or flickering-subdued clear image to be displayed.

It is a further object of the present invention to provide a lamination film which comprises an anti-glare layer having an uneven surface structure and a barrier layer and in which the damage or deterioration of the barrier layer in rolling up the film is inhibited, and a process for producing the film, as well as an electronic device provided with the film.

MEANS TO SOLVE THE PROBLEMS

The inventors of the present invention made extensive studies and finally found that a lamination film having excellent gas-barrier properties (for example, barrier properties against water vapor) and being suitable for an electronic device (such as an electronic paper or an organic EL device) is obtained by forming an anchor layer comprising a cured product of a specified vinyl polymerizable composition, a barrier layer comprising a metal or a metal compound, an etching protection layer having an acid or alkali resistance, and a transparent electroconductive layer comprising an electroconductive inorganic compound, in this order, on one side (the opposite side of a viewing side) of a base film. The

present invention was accomplished based on the above findings.

That is, the lamination film (or multilayer film) of the present invention comprises, in the following order: a base film comprising a transparent polymer; an anchor layer formed on at least a first side of the base film, the anchor layer comprising a cured product of a polymerizable composition containing a vinyl monomer and/or prepolymer; a barrier layer comprising a metal or a metal compound; an etching protection layer having an acid resistance or an alkali resistance; and a transparent electroconductive layer comprising an electroconductive inorganic compound; the vinyl monomer and/or prepolymer contains at least a silicone (meth) acrylate monomer and/or prepolymer. The vinyl monomer and/or prepolymer may comprise a silicone (meth)acrylate monomer and/or prepolymer, and a silicon-free vinyl monomer and/or prepolymer. The silicon-free vinyl monomer and/or prepolymer may comprise a urethane (meth)acrylate. The ratio (weight ratio) of the silicone (meth) acrylate monomer and/or prepolymer relative to thesilicon-free vinylmonomer and/or prepolymer may be 1/99 to 30/70 as a ratio of the former/the latter. The barrier layer may be formed by a film-forming means selected from the group consisting of a vacuum deposition, an ion plating, a sputtering, and a chemical vapor deposition, and the barrier layer may have a thickness of 20 to 300 nm. The etching protection layer may comprise an etching-resistant vinyl polymer, a silicon carbide, a fluorine-containing polymer, a fluorine carbide (or a fluorinated carbide), or a titanium oxide. In the transparent electroconductive layer, the electroconductive inorganic compound may be a metal oxide. The lamination film of the present invention for an electronic device may comprise a functional layer formed on a second side of the base film. The functional layer may be an anti-glare layer, for example, an anti-glare layer which comprises one or a plurality of polymers and one or a plurality of cured products of curable resin-precursors and has a phase-separation structure forming an uneven surface thereof (or has a surface having recesses and projections due to a phase-separation structure). The functional layer of the present invention may be a hardcoat layer, for example, a hardcoat layer comprising one or a plurality of polymers and one or a plurality of curedproducts of curable resin-precursors. The lamination film of the present invention may be a film for disposing at a viewing side of an electronic device.

The present invention also includes a process for producing the lamination film, which comprises forming an anchor layer on at least a first side of a base film by coating, and forming a barrier layer, an etching protection layer, and a transparent electroconductive layer in this order by physical or chemical vapor deposition. The production process may comprise a step for rolling up the film.

Further, the present invention includes an electronic device provided with the lamination film. The electronic device includes an electronic paper and an organic EL.

As used herein, the term "organic EL" means not only an organic EL display as a display apparatus but also an organic EL lighting apparatus provided with a simple circuit for lighting.

EFFECTS OF THE INVENTION

According to the present invention, an anchor layer comprising a cured product of a specified vinyl polymerizable composition, a barrier layer comprising a metal or a metal compound, an etching protection layer having an acid resistance or an alkali resistance, and a transparent electroconductive layer comprising an electroconductive inorganic compound, are formed in this order on a first side of a base film, and the resulting lamination film has excellent gas-barrier properties (for example, barrier properties against water vapor). Moreover, even if the lamination film is subjected to an etching treatment with an acid or an alkali, the etching protection layer can prevent the deterioration of the barrier layer, thereby preventing the decrease in the gas-barrier properties of the film. Further, a lamination film for an electronic device having high gas-barrier properties and allowing a sparkling- or flickering-subdued clear image to be displayed on a display screen can efficiently be produced by forming an anti-glare layer on a second side of the base film. Furthermore, the film comprising an anti-glare layer having an uneven surface structure formed by phase separation as the anti-glare layer can inhibit the damage or deterioration of the barrier layer even when rolled up. Moreover, a hardcoat layer disposed at the second side of the base film allows the outermost side of the film to be hardly scratched with an input stylus pen. Each lamination film as described above is suitable as a lamination film to be disposed at a viewing side of an electronic device, for example, a lamination film to be disposed at a display side with respect to an ink layer (a display layer) of an electronic paper and a lamination film to be disposed as viewing-side film of an organic EL.

BRIEF DESCRIPTION OF DRAWINGS

[Fig. 1] Fig. 1 is a schematic view illustrating an apparatus for measuring a transmitted scattering profile (an angle distribution of a transmitted scattered-light) of a lamination film.
[Fig. 2] Fig. 2 is a schematic cross-sectional view showing an electronic paper in accordance with an embodiment of the present invention.

DESCRIPTION OF EMBODIMENTS.

[Lamination film]

The lamination film of the present invention comprises a base film, and an anchor layer, a barrier layer, an etching protection layer and a transparent electroconductive layer formed in this order on a first side of the base film.

(Base film)

The base film is not particularly limited to a specific one as far as the film has transparency and flexibility. The base film can suitably be selected according to the purpose and is usually composed of a transparent polymer. The transparent polymer may be a thermoplastic polymer or may be a thermosetting polymer as far as the thermosetting polymer is colorless. More preferably, the transparent polymer is a thermoplastic polymer. Specifically, the transparent polymer may include a polyolefin (e.g., a polyethylene, a polypropylene, and an amorphous polyolefin), a styrenic polymer (e.g., a polystyrene and an acrylonitrile-styrene copolymer), a polyester [e.g., a poly(alkylene arylate) (such as a poly (ethyleneterephthalate) (PET), a PET copolymer (PET-G) containing cyclohexane dimethanol as a diol component, a poly(butylene terephthalate) (PBT), or a poly(ethylene naphthalate) (PEN)), a polyarylate, and a liquid-crystalline polyester], a polyamide (e.g., a polyamide 6, apolyamide 66, and a polyamide 12), apoly (vinyl chloride) (e.g., a vinyl chloride homopolymer), a polycarbonate (e.g., a bisphenol A-based polycarbonate), a poly(vinyl alcohol), a cellulose ester polymer, a polyimide, a polysulfone, a poly(phenylene ether), a poly(phenylene sulfide), and a fluorine-containing polymer.
These transparent polymers may be used alone or in combination. Among these plastics, at least one plastic selected from the group consisting of a polyester and a polycarbonate is preferred. A poly(alkylene arylate) (such as a PET or a PEN) is more preferred. Further, as the base film, a film obtainable by biaxially stretching a poly(alkylene arylate) (such as a PET or a PEN) is more preferred.
If necessary, an additive may be added to the base film. Examples of the additive may include a stabilizer (e.g., an antioxidant, an ultraviolet ray absorbing agent, a light stabilizer, and a heat stabilizer), a nucleation agent, a flame retardant, a flame-retardant auxiliary, a filler, a plasticizer, an impact modifier, a reinforcer, a coloring agent, a dispersing agent, an antistatic agent, a foaming agent, and an antibacterial agent. These additives may be used alone or in combination.
The base film may be a non-stretched film or a stretched (uniaxially or biaxially stretched) film. Moreover, in order to improve the adhesive property, the base filmmaybe subjected to a surface treatment [for example, a discharge treatment (such as corona discharge or glow discharge), an acid treatment, and a flame treatment].
The base film may have a thickness of, for example, about 1 to 500 $\mu$m (e.g., about 10 to 500 $\mu$m), preferably about 50 to 400 $\mu$m, and more preferably about 100 to 250 $\mu$m.

(Anchor layer)

The anchor layer contains an adhesive polymer in terms of the adhesion of the base layer and the barrier layer and comprises a cured product of a vinyl polymerizable composition containing at least a silicone (meth)acrylate component in terms of improved gas-barrier properties of the barrier layer. The polymerizable composition usually comprises a vinyl component and a polymerization initiator.

(1) Vinyl component

The vinyl component contains at least a silicone (meth)acrylate component. The vinyl component may comprise a silicone (meth)acrylate component alone and usually comprises a silicone (meth)acrylate component and a silicon-free vinyl [particularly, a silicon-free (meth) acrylic] monomer and/or prepolymer [hereinafter, may be referred to as a "silicon-free vinyl component (silicon-free (meth)acrylic component)" generically].
Combination of the silicon-free vinyl component and the silicone (meth)acrylate component significantly improves the gas barrier properties (for example, barrier properties against water vapor). The reason why the combination improves the gas barrier properties is not known exactly. For example, the following are the presumable factors: a firm adhesion between the base film and the barrier layer through the anchor layer, improved smoothness of the anchor layer, improved denseness of the barrier layer due to the anchor layer, and others.

(A) Silicone (meth)acrylate component

The silicone (meth)acrylate component is not particularly limited to a specific one as far as the component is a compound (curable compound) having a silicon atom and a (meth)acryloyl group. The silicone (meth)acrylate component usually has an organosiloxane unit [-Si(-R)$_2$-O-] (where the group R represents a substituent). The number of Si atoms (or organosiloxane units) per molecule may be not less than 1 (for example, about 1 to 30, preferably about 1 to 20, and more preferably about 1 to 15). Moreover, the number of (meth)acryloyl groups per molecule may be not less than 1 (for example, about 1 to 20, preferably about 1 to 15, and more preferably about 1 to 10).

The silicone (meth)acrylate component may be a monomer, an oligomer (or a prepolymer), or combination of the monomer and the oligomer. Moreover, the oligomer (prepolymer) may be a polysiloxane oligomer having a plurality of (-Si-O) bonds or may be an oligomer (such as a dimer or a trimer) obtainable by hydrolytic condensation of a silicone (meth)acrylate monomer having a hydrolytically condensable group (e.g., a C$_{1-4}$ alkoxy group methoxy or ethoxy, and a halogen atom such as chlorine atom).

Representative examples of the silicone (meth)acrylate component may include a silicone mono- to tetra(meth) acrylate having one Si atom per molecule and a silicone tetra- to hexa (meth) acrylate having two Si atoms per molecule.

These silicone (meth)acrylate components may be used alone or in combination. Among these silicone (meth)acrylate components, the preferred one may include a silicone (meth) acrylate component having a plurality of (e.g., about 2 to 10, preferably about 2 to 8, and more preferably about 2 to 6) (meth)acryloyl groups and one or a plurality of (e.g., about 1 to 20, preferably about 1 to 10, and more preferably about 1 to 6) Si atom(s) per molecule [forexample, a silicone di-to hexa (meth) acrylate, preferably a silicone di- to tetra(meth)acrylate, and particularly a silicone di- to tri (meth)acrylate such as a silicone di(meth)acrylate]. Incidentally, the silicone di (meth) acrylate is available as the tradename "EBECRYL350" (manufactured by DAICEL-CYTEC Company, Ltd.), and others; the silicone hexa(meth)acrylate is available as the trade name "EBECRYL1360" (manufactured by DAICEL-CYTEC Company, Ltd.), and others.

The viscosity of the silicone (meth)acrylate component at 25°C may be about 100 to 5000 mPa·s, preferably about 200 to 4000 mPa·s, and more preferably about 300 to 3000 mPa·s.

The silicone (meth)acrylate component content of the whole polymerizable composition also including the additive (e.g., a polymerization initiator) can be selected from the range of not more than 50% by weight (e.g., about 1 to 30% by weight) or may be about 0.01 to 25% by weight (e.g., about 0.05 to 20% by weight), preferably about 0.1 to 15% by weight (e.g., about 0.5 to 10% by weight), and more preferably about 1 to 5% by weight (e.g., about 2 to 4% by weight).

(B) Silicon-free vinyl component

The silicon-free vinyl component is not particularly limited to a specific one as far as the component is free from a silicon atom and is a compound (a curable compound) having an $\alpha$, $\beta$-ethylenic unsaturated double bond. The number of $\alpha$, $\beta$-ethylenic unsaturated double bonds [in particular, (meth) acryloyl groups] per molecule may be not less than 1 (e.g., about 1 to 20, preferably about 1 to 15, and more preferably about 1 to 10).

The silicon-free vinyl component may be a monomer, an oligomer (or a prepolymer), or combination of the monomer and the oligomer.

The silicon-free vinyl monomer may include a monofunctional vinyl monomer [e.g., a monofunctional (meth)acrylate (or a mono(meth)acrylate)], a difunctional vinyl monomer [e.g., a difunctional (meth)acrylate (or a di(meth)acrylate)], a tri-or more-functionalvinylmonomer [e.g., a tri- or polyfunctional (meth)acrylate (or a poly(meth)acrylate)], and others.

The monofunctional vinyl monomer may include, for example, (meth)acrylic acid; a C$_{1-24}$alkyl (meth)acrylate such as methyl (meth) acrylate, ethyl (meth) acrylate, propyl (meth)acrylate, butyl (meth)acrylate, isobutyl (meth)acrylate, sec-butyl (meth)acrylate, t-butyl (meth)acrylate, hexyl (meth)acrylate, octyl (meth)acrylate, isooctyl (meth)acrylate, 2-ethylhexyl (meth)acrylate, decyl (meth)acrylate, lauryl (meth)acrylate, or stearyl (meth)acrylate; a cycloalkyl (meth)acrylate such as cyclohexyl (meth)acrylate; a crosslinked cyclic (meth)acrylate such as dicyclopentyl (meth)acrylate, dicyclopentenyl (meth)acrylate, dicyclopentenyloxyethyl (meth)acrylate, bornyl (meth) acrylate, isobornyl (meth) acrylate, tricyclodecanyl (meth)acrylate, or adamantyl (meth) acrylate; an aryl (meth) acrylate such as phenyl (meth) acrylate or nonylphenyl (meth)acrylate; an aralkyl (meth)acrylate such as benzyl(meth)acrylate; a hydroxyC$_{2-10}$alkyl (meth)acrylate or a C$_{2-10}$alkanediol mono(meth)acrylate such as hydroxyethyl (meth) acrylate, hydroxypropyl (meth) acrylate, or hydroxybutyl (meth)acrylate; a fluoroC$_{1-10}$alkyl (meth)acrylate such as trifluoroethyl (meth)acrylate, tetrafluoropropyl (meth) acrylate, hexafluoroisopropyl (meth)acrylate; an alkoxyalkyl (meth)acrylate such as methoxyethyl (meth)acrylate; an aryloxyalkyl (meth)acrylate such as phenoxyethyl (meth)acrylate; an aryloxy(poly)alkoxyalkyl (meth)acrylate such as phenylcarbitol (meth)acrylate, nonylphenylcarbitol (meth)acrylate, or nonylphenoxypolyethylene glycol (meth)acrylate; an aryloxyhydroxyalkyl (meth)acrylate such as phenoxyhydroxypropyl (meth)acrylate; a polyalkylene glycol mono(meth) acrylate such as a polyethylene glycol mono(meth)acrylate; an alkanepolyol mono(meth)acrylate such as glycerin mono (meth)acrylate; an amino group-containing (meth)acrylate such as 2-dimethylaminoethyl (meth)acrylate, 2-diethylaminoethyl (meth)acrylate, or 2-t-butylaminoethyl (meth)acrylate; and glycidyl (meth)acrylate.

Examples of the difunctional vinyl monomer may include an allyl (meth)acrylate; an alkanediol di (meth) acrylate such as ethylene glycol di (meth) acrylate, propylene glycol di(meth)acrylate, 1,3-propanediol di(meth)acrylate, 1,4-butanediol di(meth)acrylate, neopentyl glycol di(meth)acrylate, or 1,6-hexanediol di(meth)acrylate; an alkanepolyol di(meth)acrylate such as glycerin di(meth)acrylate; a polyalkylene glycol di(meth)acrylate such as diethylene glycol di (meth)acrylate, triethylene glycol di(meth)acrylate, a polyethylene glycol di(meth)acrylate, dipropylene glycol di (meth) acrylate, a polypropylene glycol di (meth) acrylate, or a polyoxytetramethylene ether glycol di (meth) acrylate; a di(meth) acrylate of a $C_{2-4}$alkylene oxide adduct of a bisphenol compound (such as bisphenol A or S), such as 2,2-bis(4-(meth) acryloxyethoxyphenyl)propane, 2,2-bis(4-(meth)acryloxydiethoxyphenyl)propane, or 2,2-bis(4-(meth)acryloxypolyethoxyphenyl)propane; a di(meth)acrylate of an acid-modified alkanepolyol, such as a fatty-acid-modified pentaerythritol; and a crosslinked cyclic di(meth)acrylate such as tricyclodecanedimethanol di(meth)acrylate or adamantane di(meth) acrylate.

As the polyfunctional vinyl monomer, there may be mentioned, for example, an alkanepolyol (meth) acrylate such as trimethylolpropane tri(meth)acrylate, trimethylolethane tri(meth)acrylate, glycerin tri(meth)acrylate, pentaerythritol tri(meth)acrylate, pentaerythritol tetra(meth)acrylate, tetramethylolethane tetra(meth)acrylate, dipentaerythritol penta(meth)acrylate, or dipentaerythritol hexa(meth)acrylate; a poly(meth)acrylate of the $C_{2-4}$alkylene oxide adduct of the alkanepolyol; and a tri(meth)acrylate having a triazine ring, such as tris(2-hydroxyethyl)isocyanurate tri(meth)acrylate.

These monomers may be used alone or in combination.

The silicon-free vinyl oligomer may include a polyester (meth)acrylate [for example, an aliphatic or aromatic polyester (meth) acrylate producible by a reaction of a polycarboxylic acid, a polyol, and a (meth)acrylic acid and/or a hydroxyalkyl (meth)acrylate]; an alkyd polymer; an epoxy (meth)acrylate [for example, an epoxy (meth)acrylate obtainable by ring-opening addition of (meth) acrylic acid to an epoxy compound having a plurality of epoxy groups (e.g., a polyhydric-alcohol-based, polycarboxylic-acid-based, bisphenol-based (such as bisphenol A, F, or S), or novolak-based epoxy polymer)]; a urethane (meth) acrylate; a polyacryl (meth) acrylate [for example, a polyacryl(meth)acrylate obtainable by ring-opening addition of (meth)acrylic acid to an epoxy group of a copolymer of a (meth)acrylic monomer and glycidyl (meth)acrylate]; a polyether (meth)acrylate [e.g., a (meth) acrylate of a bisphenol A-alkylene oxide adduct] ; a polybutadiene (meth)acrylate; melamine (meth)acrylate; a polyacetal (meth)acrylate; and others. These oligomers may be used alone or in combination.

Among these silicon-free vinyl components, an oligomer such as a urethane (meth)acrylate is preferred in terms of flexibility or others.

The urethane (meth)acrylate is not particularly limited to a specific one. For example, the urethane (meth)acrylate may be a urethane (meth)acrylate obtained by allowing a (meth) acrylate having an active hydrogen atom [for example, a hydroxyalkyl (meth) acrylate] to react with a polyisocyanate component [or a prepolymer which is obtained by a reaction of a polyisocyanate component and a polyol component and has a free isocyanate group].

Examples of the polyisocyanate component may include an aliphatic polyisocyanate [for example, an aliphatic diisocyanate such as tetramethylene diisocyanate, hexamethylene diisocyanate (HDI), trimethylhexamethylene diisocyanate (TMDI), or lysine diisocyanate (LDI); and an aliphatic triisocyanate such as 1,6,11-undecane triisocyanate methyloctane or 1,3,6-hexamethylene triisocyanate], an alicyclic polyisocyanate [for example, an alicyclic diisocyanate such as cyclohexane 1,4-diisocyanate, isophorone diisocyanate (IPDI), hydrogenerated xylylene diisocyanate, or hydrogenerated bis(isocyanatophenyl)methane; and an alicyclic triisocyanate such as bicycloheptane triisocyanate], and an aromatic polyisocyanate [for example, an aromatic diisocyanate such as phenylene diisocyanate, tolylene diisocyanate (TDI), xylylene diisocyanate (XDI), tetramethylxylylene diisocyanate (TMXDI), naphthalene diisocyanate (NDI), bis(isocyanatophenyl)methane (MDI), toluidine diisocyanate (TODI), or 1,3-bis(isocyanatophenyl)propane; and an aromatic triisocyanate such as triphenylmethane triisocyanate]. These polyisocyanate components may be used alone or in combination.

The polyol component is not particularly limited to a specific one. For example, the polyol component may include a low molecular weight polyol [for example, an aliphatic polyol (e.g., a $C_{2-10}$alkanediol such as ethylene glycol, propylene glycol, or tetramethylene ether glycol; and a $C_{3-12}$aliphatic polyol such as glycerin, trimethylolpropane, or pentaerythritol), an alicyclic polyol(e.g., a cycloalkanediol such as 1,4-cyclohexanediol, a hydrogenerated bisphenol com-pound such as a hydrogenerated bisphenol A, or a $C_{2-4}$alkylene oxide adduct thereof), an aromatic polyol (e.g. , an araliphatic diol such as xylylene glycol, a bisphenol compound such as bisphenol A, S, or F, or a $C_{2-4}$alkylene oxide adduct thereof)], and a polymer polyol [for example, a poly(ether polyol) (e.g., a poly ($C_{2-4}$alkylene glycol) such as a poly (ethylene glycol), a poly(propylene glycol), or a poly(tetramethylene ether glycol)), a polyester polyol (e.g., a polyester polyol of an aliphatic dicarboxylic acid (such as adipic acid) and an aliphatic diol), and a polycarbonate polyol]. These polyol components may be used alone or in combination.

The polyisocyanate component and the (meth) acrylate having an active hydrogen atom (or the polyol component) are usually employed in combination at a ratio in which the isocyanate group and the active hydrogen atom are substantially equivalent (the isocyanate group/the active hydrogen atom is about 0.8/1 to 1.2/1).

Incidentally, processes for producing these urethane (meth) acrylates maybe referred to Japanese Patent Application Laid-Open publication No. 2008-74891, or others.

The weight-average molecular weight of the urethane (meth) acrylate may be about 500 to 10000, preferably about 600 to 9000, and more preferably about 700 to 8000 in terms of polystyrene in a gel permeation chromatography (GPC).

The ratio (weight ratio) of the silicone (meth) acrylate component relative to the silicon-free vinyl component [for example, a silicon-free (meth)acrylic component such as urethane (meth)acrylate] can be selected from the range of about 0.01/99.99 to 50/50 (e.g., about 1/99 to 30/70) as a ratio of the former/the latter. The ratio of the silicone (meth) acrylate component relative to the silicon-free vinyl component may be about 0.01/99.99 to 30/70 (e.g., about 0.05/99.95 to 25/75), preferably about 0.1/99.9 to 20/80 (e.g., about 0.5/99.5 to 15/85), and more preferably about 1/99 to 10/90 (e.g., about 1.5/98.5 to 8/92, particularly about 2/98 to 5/95). According to the present invention, even when the silicone (meth)acrylate component content is low, the gas barrier properties (barrier properties against water vapor) can significantly be improved.

(2) Polymerization initiator

The polymerization initiator may be a thermal polymerization initiator [a thermal radical generator such as a peroxide (e.g., benzoyl peroxide)] or a photopolymerization initiator (a photo radical generator). The preferred polymerization initiator includes a photopolymerization initiator. Examples of the photopolymerization initiator may include a benzoin compound (e.g., benzoin, and a benzoin alkyl ether such as benzoin methyl ether, benzoin ethyl ether, or benzoin isopropyl ether), a phenyl ketone [for example, an acetophenone compound (e.g., acetophenone, 2-hydroxy-2-methyl-1-phenylpropan-1-one, 2,2-dimethoxy-2-phenylacetophenone, 2,2-diethoxy-2-phenylacetophenone, and 1,1-dichloroacetophenone); an alkyl phenyl ketone such as 2-hydroxy-2-methylpropiophenone; and a cycloalkyl phenyl ketone such as 1-hydroxycyclohexyl phenyl ketone], an aminoacetophenone {for example, 2-methyl-1-[4-(methylthio) phenyl]-2-morpholinoaminopropanone-1, 2-benzyl-2-dimethylamino-1-(4-morpholinophenyl)-butanone-1}, an anthraquinone compound (e.g., anthraquinone, 2-methylanthraquinone, 2-ethylanthraquinone, 2-t-butylanthraquinone, and 1-chloroanthraquinone), a thioxanthone compound (e.g., 2,4-dimethylthioxanthone, 2,4-diethylthioxanthone, 2-chlorothioxanthone, and 2,4-diisopropylthioxanthone), a ketal compound (e.g., acetophenone dimethyl ketal and benzyl dimethyl ketal), a benzophenone compound (e.g., benzophenone), a xanthone compound, and a phosphine oxide compound (e.g., 2,4,6-trimethylbenzoyldiphenylphosphine oxide). These photopolymerization initiators may be used alone or in combination.

The ratio of the polymerization initiator relative to 100 parts by weight of the vinyl component ((meth) acrylic component) may be about 0.01 parts by weight to 10 parts by weight, preferably about 0.05 to 5 parts by weight, and more preferably about 0.1 to 2.5 parts by weight.

Incidentally, the photopolymerization initiator may be used in combination with a photosensitizer. The photosensitizer may include a conventional component, for example, a tertiary amine [e.g., a trialkylamine, a trialkanolamine (e.g., triethanolamine), an alkyl dialkylaminobenzoate such as ethyl N,N-dimethylaminobenzoate or amyl N,N-dimethylaminobenzoate, and a bis(dialkylamino)benzophenone such as 4,4-bis(dimethylamino)benzophenone (Michler's ketone) or 4,4'-diethylaminobenzophenone], a phosphine compound such as triphenylphosphine, a toluidine compound such as N,N-dimethyltoluidine, and an anthracene compound such as 9,10-dimethoxyanthracene, 2-ethyl-9,10-dimethoxyanthracene, or 2-ethyl-9,10-diethoxyanthracene. The photosensitizers may be used alone or in combination.

The amount of the photosensitizer relative to 100 parts by weight of the photopolymerization initiator may for example be about 0.1 to 100 parts by weight and preferably about 0.5 to 80 parts by weight.

The thickness of the anchor layer is not particularly limited to a specific one. For example, the thickness of the anchor layer may be about 0.1 to 15 $\mu$m, preferably about 0.5 to 12 $\mu$m, and more preferably about 1 to 10 $\mu$m (e.g., about 2 to 8 $\mu$m). An anchor layer having an excessively small thickness tends to be short of uniformity.

(Barrier layer)

The barrier layer usually contains a metal or a metal compound. It is preferable that the barrier layer comprise a metal or a metal compound capable of forming a thin film (in particular, a transparent thin film). The metal may include, for example, a group 2A element of the Periodic Table (such as beryllium, magnesium, calcium, strontium, or barium); a transition element (such as titanium, zirconium, ruthenium, hafnium, tantalum, or copper); a group 2B element of the Periodic Table (such as zinc); a group 3B element of the Periodic Table (such as aluminum, gallium, indium, or thallium); a group 4B element of the Periodic Table (such as silicon, germanium, or tin); and a group 6B element of the Periodic Table (such as selenium or tellurium). Moreover, as the metal compound, there may be mentioned an oxide of the metal, a nitride of the metal, an oxynitride of the metal, a halide of the metal, a carbide of the metal, and others. These metals or metal compounds may be used alone or in combination. Among these metals or metal compounds, in the respect that not only gas barrier properties but also transparency can be improved, a metal oxide of a group 3B element (such as aluminum), a group 4B element (such as silicon) or a transition element (titanium) of the Periodic Table, a metal oxynitride thereof, or a metal nitride thereof is preferred. In particular, an aluminum oxide [composition formula $Al_xO_y$ (x,y>0)], a silicon nitride [composition formula $Si_xN_y$ (x,y>0)], or a silicon oxynitride [composition formula $Si_xO_yN_z$ (x,y,

z>0)]) is preferred.

The thickness of the barrier layer can suitably be selected according to a film-forming means (or method) . For example, the thickness of the barrier layer may be about 10 to 300 nm (e.g., about 20 to 300 nm), preferably about 15 to 250 nm (e.g., about 20 to 200 nm), and more preferably about 25 to 150 nm (e.g. , about 30 to 100 nm, and particularly about 40 to 90 nm). In particular, in order to prevent the generation of cracks, form a uniform film, and hold or maintain gas barrier properties, it is preferable that the thickness of the barrier layer be adjusted to about 10 to 100 nm (e.g., about 15 to 80 nm, and particularly about 20 to 60 nm) for a physical vapor deposition, and it is preferable that the thickness of the barrier layer be adjusted to about 50 to 400 nm (e.g., about 60 to 350 nm, and particularly about 100 to 300 nm) for a chemical vapor deposition. According to the application, the thickness of the barrier layer may be selected suitably. For example, for an electronic paper, the thickness of the barrier layer may be about 10 to 300 nm (particularly, about 20 to 250 nm); for an organic EL, the thickness of the barrier layer may be about 30 to 400 nm (particularly, about 40 to 300 nm).

(Etching protection layer)

The etching protection layer is provided so that the barrier layer is prevented from deteriorating or corroding caused by an acid or an alkali due to the etching treatment of the transparent electroconductive layer. The etching protection layer is not particularly limited to a specific one as far as the layer is acid-resistant or alkali-resistant (particularly, acid-resistant) and transparent. A material for the etching protection layer may include, for example, an acid-resistant and alkali-resistant polymer (e.g., a polyolefin, a poly (vinyl chloride), a poly(vinylidene chloride), a poly(vinyl alcohol), a fluorine-containing polymer, a (meth)acrylic polymer, an epoxy polymer, and a biphenyltetracarboxylic acid-based polyimide), an alkali-resistant polymer (e.g., a styrenic polymer, a polyamide, and a cellulose ester), an acid-resistant polymer (e.g., a polycarbonate, and a phenol polymer), a fluorine compound (e.g., a fluorine carbide), a silicon compound (e.g., a silicon carbide), a boron compound (e.g., a boron carbide and a boron nitride) , and a titanium compound (e.g., a titanium oxide).

Among these materials, in view of excellent transparency and etching resistance, an etching-resistant vinyl polymer, a silicon carbide, a fluorine-containing polymer, a fluorine carbide, or a titanium oxide is particularly preferred. Apreferred characteristic of the protection layer is a high total light transmittance. Moreover, a protection layer having a high transparency and being substantially colorless is particularly preferred as the etching protection layer. Further, a protection layer having an excellent resistance against at least an acid is particularly preferred as the etching protection layer.

As the etching-resistant vinyl polymer, the polymer exemplified in the anchor layer, e.g., the cured product of the composition containing the vinyl component (such as the silicon-free vinyl component or the silicone (meth)acrylate) and the polymerization initiator, may be used. The silicon-free vinyl component may be a urethane (meth)acrylate, asilicone (meth)acrylate, or others. The (meth)acrylic cured product may be a cured layer formed by flash evaporation (or flash deposition) described in Japanese Patent Application Laid-Open Publication No. 2009-23284.

As the silicon carbide, conventional silicon carbides [composition formula $Si_xC_y$] having various crystal forms are usable. For example, a hexagonal $\alpha$-silicon carbide produced by Acheson process, a cubic $\beta$-silicon carbide produced at a temperature condition of not higher than 2000°C, and a mixture of these silicon carbides can be used. The silicon carbide may for example be a silicon carbide described in Japanese Patent No. 3928989 or Japanese Patent No. 4178339. Further, the silicon carbide can be formed into a film by a conventional process, for example, according to a process described in the above-mentioned documents.

Further, the silicon carbide may be a silicon-containing carbon, a silicon-containing graphite, a silicon-containing diamond-like carbon(DLC), and others. Among these silicon carbides, a silicon-containing DLC is preferred. The silicon-containing DLC is a compound in which silicon is added to a DLC having an amorphous structure intermediate between a black lead (graphite) structure and a diamond structure. The silicon content of the silicon-containing DLC may be, for example, about 1 to 50% by atom, preferably about 2 to 40% by atom, andmorepreferably about 5 to 30% by atom. The silicon-containing DLC may be, for example, a silicon-containing DLC described in Japanese Patent Application Laid-Open Publication No. 2009-221518 or 2001-140608. Further, the silicon-containing DLC can be formed into a film by a conventional process, for example, according to a process described in the above-mentioned documents, e.g., a process using tetramethylsilane as a raw material.

The fluorine-containing polymer may include, for example, a homopolymer such as a polytetrafluoroethylene (PTFE), a polychlorotrifluoroethylene, or a poly(vinylidene fluoride) (PVDF); and a copolymer such as a tetrafluoroethylene-ethylene copolymer (ETFE), a tetrafluoroethylene-hexafluoropropylene copolymer (FEP), a tetrafluoroethylene-perfluoroalkylvinylether copolymer (PFA), a tetrafluoroethylene-hexafluoropropylene-perfluoroalkylvinylether copolymer, an ethylene-tetrafluoroethylene copolymer, or an ethylene-chlorotrifluoroethylene copolymer. These fluorine-containing polymers may be used alone or in combination. Among these fluorine-containing polymers, a PTFE, a PFA, and a FEP are widely used.

The fluorine carbide may be a fluorine-containing carbon, a fluorine-containing graphite, a fluorine-containing diamond-like carbon (DLC), and others. Among them, a fluorine-containing DLC is preferred. The fluorine content of the fluorine-containing DLC may be, for example, about 1 to 50% by atom, preferably about 2 to 40% by atom, and more preferably about 5 to 30% by atom. The fluorine-containing DLC may be, for example, a fluorine-containing DLC described in Japanese Patent Application Laid-Open Publication No. 2007-213715. Further, the fluorine-containing DLC can be formed into a film by a conventional process, for example, according to a process described in the above-mentioned document, e.g., a process using a gas containing a fluorinated hydrocarbon as a raw material.

As the titanium oxide, conventional titanium oxides [composition formula $Ti_xO_y$] are usable. For example, titanium dioxide, $Ti_2O_5$, and $Ti_2O_3$ may be used, and titanium dioxide is usually a main component. Further, the titanium oxide may be a crystal system such as anatase, rutile, or brookite; rutile titanium dioxide is preferred. The titanium oxide may be, for example, a titanium oxide described in Japanese Patent Application Laid-Open Publication No. 2010-37648, 2007-185641, or 2008-137888. Further, the titanium oxide can be formed into a film by a conventional process, for example, according to a process described in the above-mentioned documents.

In forming the etching-resistant vinyl polymer, the silicon carbide, the fluorine-containing polymer, the fluorine carbide, or the titanium oxide into the etching protection layer by physical vapor deposition or chemical vapor deposition, the thickness of the etching protection layer can suitably selected depending on the material or film-forming process. An etching protection layer of the inorganic compound such as the silicon carbide, the fluorine carbide or the titanium oxide has a thickness of, for example, about 1 to 50 nm, preferably about 2 to 30 nm, and more preferably about 3 to 25 nm (particularly about 5 to 20 nm). For example, an etching protection layer of the (meth) acrylic cured product has a thickness of, e.g. , about 100 to 2000 nm, preferably about 150 to 1000 nm, and more preferably about 180 to 700 nm (particularly about 200 to 600 nm).

(Transparent electroconductive layer)

The transparent electroconductive layer is a conventional transparent electroconductive layer used as a transparent electrode, and comprises, for example, an electroconductive inorganic compound such as a metal oxide [e.g., an indium oxide (such as $InO_2$, $In_2O_3$ or $In_2O_3$-$SnO_2$ complex metal oxide (ITO)), a tin oxide (such as $SnO_2$, $SnO_2$-$Sb_2O_5$ complex metal oxide, or fluorine-doped tin oxide (FTO)), and a zinc oxide (such as ZnO or ZnO-$Al_2O_3$ complex metal oxide)] or a metal (e.g., gold, silver, platinum, and palladium). The transparent electroconductive layer may be, for example, a transparent electroconductive layer described in Japanese Patent Application Laid-Open Publication No. 2009-76544, Japanese Patent No. 4165173, or Japanese Patent Application Laid-Open Publication No. 2004-149884.

The transparent electroconductive layer may have a surface resistance of, for example, about 10 to 1000 $\Omega$, preferably about 15 to 500 $\Omega$, and more preferably about 20 to 300 $\Omega$.

The thickness of the transparent electroconductive layer is not particularly limited to a specific one. The transparent electroconductive layer may have a thickness of about 1 to 1000 nm, preferably about 5 to 500 nm, and more preferably about 10 to 400 nm (particularly about 20 to 300 nm).

(Functional layer)

The lamination film of the present invention may further comprise a functional layer on a second side of the base film. The functional layer may include a conventional functional layer, for example, a light-scattering layer, an anti-glare layer, an anti-reflection layer, a hardcoat layer, and a low-refraction-index layer (or a low-refraction layer). Among these layers, a hardcoat layer, an anti-glare layer, or the like is widely used. The hardcoat layer is not particularly limited to a specific one as far as a material for the hardcoat layer is transparent and has a high abrasion resistance. As the material, a curable resin is preferred. For example, the curedproduct of the composition containing the silicon-free vinyl component and the polymerization initiator, exemplified in the anchor layer, can be used for the hardcoat layer. Further, among the silicon-free vinyl components, in view of the combination of transparency, flexibility and abrasion resistance necessary for the electronic device, a urethane (meth)acrylate is particularly preferred.

Further, according to the present invention, in order to improve the visibility of the electronic device, it is particularly preferable that the lamination film comprise an anti-glare layer as the functional layer. The anti-glare layer (or anti-dazzle layer) is not particularly limited to a specific one as far as the layer is transparent and has anti-glareness. The anti-glare layer preferably has an uneven surface structure. According to the present invention, the anti-glare layer can prevent sparkling or flickering on a display screen of the electronic device and improve the visibility of the display screen. The anti-glare layer having an uneven surface structure may include, for example, a layer having an uneven structure formed by phase separation of a plurality of polymer components (or precursors thereof) (an anti-glare layer having a phase-separation structure), a layer having an uneven structure formed by mixing a particle into a polymer component (or a precursor thereof) (an anti-glare layer containing a particle), and a layer having an uneven structure formed by using a mold. Among these layers, in terms of easy achievement of a high anti-glareness, the layer having a phase-separation structure or the layer containing a particle is preferred.

(1) Anti-glare layer having a phase-separation structure

The layer having a phase-separation structure may comprise one or more polymers and one or more cured products of curable resin-precursors and have an uneven surface (an uneven structure) due to phase separation. The anti-glare layer has a phase-separation structure formed by spinodal decomposition from a liquid phase (wet spinodal decomposition). That is, by using a polymer composition which contains a polymer, a curable resin-precursor and a solvent, during a step of removing the solvent from a liquid phase (or a uniform solution or a coat layer thereof) in the polymer composition with drying or other means, a phase separation by spinodal decomposition can be generated depending on condensation of the liquid phase, and a phase-separated structure in which the distance between phases is fine and relatively regular can be formed. More specifically, the above-mentioned wet spinodal decomposition can usually be carried out by coating a base film with a liquid mixture or polymer composition (uniform solution) containing one or more polymers, one or more curable resin-precursors and a solvent, and evaporating the solvent from the resulting coat layer. The uneven structure due to the phase-separation structure is finer than an uneven structure due to a fine particle, and can be formed without a hard fine particle. Further, since the uneven structure not only is a fine structure but also is a regular and smooth (or gentle) surface structure, the damage or deterioration of the barrier layer being in contact with the anti-glare layer can be prevented even if the lamination film is taken up and wound up in a roll state.

(A) Polymer component

As the polymer component, a thermoplastic polymer is usually employed. As the thermoplastic polymer, there may be exemplified a styrenic polymer, a (meth)acrylic polymer, an organic acid vinyl ester polymer, a poly (vinyl ether), a halogen-containing polymer, a polyolefin (including an alicyclic polyolefin), a polycarbonate, a polyester, a polyamide, a thermoplastic polyurethane, a polysulfone (e.g., a polyethersulfone and a polysulfone), a poly(phenylene ether) (e.g., a polymer of 2,6-xylenol), a cellulose derivative (e.g., a cellulose ester, a cellulose carbamate, andacelluloseether), a siliconepolymer (e. g. , a polydimethylsiloxane and a polymethylphenylsiloxane), a rubber or elastomer (e.g., a diene rubber such as a polybutadiene or a polyisoprene, a styrene-butadiene copolymer, an acrylonitrile-butadiene copolymer, an acrylic rubber, a urethane rubber, and a silicone rubber), and the like. These thermoplastic polymers may be used alone or in combination.

Among these thermoplastic polymers, the preferred thermoplastic polymer includes, for example, a styrenic polymer, a (meth) acrylic polymer, a vinyl acetate polymer, a poly(vinyl ether), a halogen-containing polymer, an alicyclic polyolefin, a polycarbonate, a polyester, a polyamide, a cellulose derivative, a silicone polymer, and a rubber or elastomer. Further, as the thermoplastic polymer, there is usually employed a polymer that is non-crystalline and is soluble in an organic solvent (particularly a common solvent for dissolving a plurality of polymers or curable compounds). In particular, a polymer that is excellent in moldability or film-forming (film-formable) properties, transparency, and weather resistance [for example, a styrenic polymer, a (meth) acrylic polymer, an alicyclic polyolefin, a polyester, and a cellulose derivative (e.g., a cellulose ester)] is preferred.

The styrenic polymer may include a homo- or copolymer of a styrenic monomer (e.g. a polystyrene, a styrene-$\alpha$-methylstyrene copolymer, and a styrene-vinyl toluene copolymer), and a copolymer of a styrenic monomer and other polymerizable monomer [e.g., a (meth)acrylic monomer, maleic anhydride, a maleimide monomer, and a diene] . The styrenic copolymer may include, for example, a styrene-acrylonitrile copolymer (AS polymer), a copolymer of styrene and a (meth)acrylic monomer [e.g., a styrene-methyl methacrylate copolymer, a styrene-methyl methacrylate-(meth) acrylate copolymer, and a styrene-methyl methacrylate-(meth) acrylic acid copolymer], and a styrene-maleic anhydride copolymer. The preferred styrenic polymer includes a polystyrene, a copolymer of styrene and a (meth)acrylic monomer [e.g., a copolymer comprising styrene and methyl methacrylate as main units, such as a styrene-methyl methacrylate copolymer], an AS polymer, a styrene-butadiene copolymer, and the like.

As the (meth) acrylic polymer, a homo- or copolymer of a (meth) acrylic monomer and a copolymer of a (meth) acrylic monomer and a copolymerizable monomer may be employed. As the (meth)acrylic monomer, there may be mentioned, for example, a monofunctional vinyl monomer exemplified as the silicon-free vinyl component (B) in the anchor layer. The copolymerizable monomer may include the above styrenic monomer, a vinyl ester monomer, maleic anhydride, maleic acid, and fumaric acid. These monomers may be used alone or in combination.

As the (meth) acrylic polymer, there may be mentioned, for example, a poly(meth)acrylate such as a poly(methyl methacrylate), a methyl methacrylate-(meth)acrylic acid copolymer, a methyl methacrylate- (meth) acrylate copolymer, a methyl methacrylate-acrylate-(meth)acrylic acid copolymer, a (meth)acrylate-styrene copolymer (e.g., a MS polymer), and a (meth)acrylic acid-methyl (meth)acrylate-isobornyl (meth)acrylate. The preferred (meth)acrylic polymer includes a poly ($C_{1-6}$alkyl (meth)acrylate) such as a poly(methyl (meth)acrylate), particularly a poly (methyl methacrylate) containing methyl methacrylate as amain component (about 50 to 100% by weight, and preferably about 70 to 100% by weight). Further, the (meth)acrylic polymer may be a silicone-containing (meth)acrylic polymer.

As the alicyclic polyolefin, there may be mentioned a homo- or copolymer of a cyclic olefin such as norbornene or dicyclopentadiene (e.g. , a polymer having an alicyclic hydrocarbon group such astricyclodecane whichissterically rigid), a copolymer of the cyclic olefin and a copolymerizable monomer (e.g., an ethylene-norbornene copolymer and a propylene-norbornene copolymer). The alicyclic polyolefin is available as, for example, the trade names "TOPAS", "ARTON", and "ZEONEX".

The polyester may be a homopolyester, e.g., a poly($C_{2-4}$alkylene terephthalate) [such as a poly(ethylene terephthalate) or a poly(butylene terephthalate)] and a poly($C_{2-4}$alkylene naphthalate). In respect of the solubility in a solvent, an aromatic polyester obtainable from an aromatic dicarboxylic acid such as terephthalic acid [for example, a copolyester comprising a $C_{2-4}$alkylene arylate unit (a $C_{2-4}$alkylene terephthalate unit and/or a $C_{2-4}$alkylene naphthalate unit) as a main component (e.g., not less than 50% by weight)] is preferred. The copolyester may include a copolyester in which, in constituting units of a poly ($C_{2-4}$alkylene arylate), part of $C_{2-4}$alkylene glycols is replaced with a polyoxy$C_{2-4}$alkylene glycol, a $C_{5-10}$alkylene glycol, an alicyclic diol (e.g., cyclohexane dimethanol and hydrogenated bisphenol A), a diol having an aromatic ring (e.g., 9,9-bis(4-(2-hydroxyethoxy)phenyl)fluorene, a bisphenol A, and a bisphenol A-alkylene oxide adduct) or the like, and a copolyester in which, in constituting units, part of aromatic dicarboxylic acids is replaced with an unsymmetric aromatic dicarboxylic acid such as phthalic acid or isophthalic acid, an aliphatic $C_{6-12}$dicarboxylic acid such as adipic acid, or the like. The polyester may also include an aliphatic polyester obtainable from an aliphatic dicarboxylic acid such as adipic acid, and a homo-or copolymer of a lactone such as ε-caprolactone. The preferred polyester is usually non-crystalline copolyester, such as a non-crystalline copolyester (e.g., a $C_{2-4}$alkylene arylate co-polyester).

Among the cellulose derivatives, the cellulose ester may include, for example, an aliphatic organic acid ester of a cellulose (e.g., a $C_{1-6}$oraganic acid ester of a cellulose such as a cellulose acetate (e.g., a cellulose diacetate and a cellulose triacetate), a cellulose propionate, a cellulose butyrate, a cellulose acetate propionate, or a cellulose acetate butyrate), an aromatic organic acid ester of a cellulose (e.g. a $C_{7-12}$aromatic carboxylic acid ester of a cellulose such as a cellulose phthalate or a cellulose benzoate), an inorganic acid ester of a cellulose (e.g. , a cellulose phosphate and a cellulose sulfate) and may be a mixed acid ester of a cellulose such as a cellulose acetate nitrate. The cellulose derivative may also include a cellulose carbamate (e.g. a cellulose phenylcarbamate), a cellulose ether (e.g. a cyanoethylcellulose; a hydroxy$C_{2-4}$alkyl cellulose such as a hydroxyethyl cellulose or a hydroxypropyl cellulose; a $C_{1-6}$alkyl cellulose such as a methyl cellulose or an ethyl cellulose; a carboxymethyl cellulose or a salt thereof, a benzyl cellulose, and an acetyl alkyl cellulose).

As the polymer component, there may be also used a polymer having a functional group participating (or being involved) in a curing reaction (or a functional group capable of reacting with the curable compound). The polymer may have the.functional group in a main chain thereof or in a side chain thereof. The functional groupmaybe introduced into a main chain of the polymer with co-polymerization, co-condensation or the like and is usually introduced into a side chain of the polymer. Such a functional group may include a condensable group or a reactive group (for example, a hydroxyl group, an acid anhydride group, a carboxyl group, an amino or an imino group, an epoxy group, a glycidyl group, and an isocyanate group), a polymerizable group [for example, a $C_{2-6}$alkenyl group such as vinyl, propenyl, isopropenyl, butenyl or allyl, a $C_{2-6}$alkynyl group such as ethynyl, propynyl or butynyl, a $C_{2-6}$alkenylidene group such as vinylidene, or a group having the polymerizable group(s) (e.g., (meth)acryloyl group)], and others. Among these functional groups, the polymerizable group is preferred.

As a process for introducing the polymerizable group in a side chain of the polymer component, for example, there maybe utilized a process of allowing a thermoplastic polymer having a functional group (such as a reactive group or condensable group) to react with a polymerizable compound having a group reactive to the functional group.

Exemplified as the thermoplastic polymer having a functional group is a thermoplastic polymer having a carboxyl group or an acid anhydride group thereof, a thermoplastic polymer having a hydroxyl group, a thermoplastic polymer having an amino group, a thermoplastic polymer having an epoxy group, and others. Moreover, such a polymer may also be a polymer in which the functional group is introduced into a thermoplastic polymer free from a functional group with co-polymerization or graft polymerization.

As the polymerizable compound, for a thermoplastic polymer having a carboxyl group or an acid anhydride group thereof, there may be used a polymerizable compound having an epoxy group, a hydroxyl group, an amino group, an isocyanate group or the like. For a thermoplastic polymer having a hydroxyl group, there may be mentioned a polymerizable compound having a carboxyl group or an acid anhydride group thereof, an isocyanate group or the like. For a thermoplastic polymer having an amino group, there may be mentioned a polymerizable compound having a carboxyl group or an acid anhydride group thereof, an epoxy group, an isocyanate group or the like. For thermoplastic polymer having an epoxy group, there maybe mentioned a polymerizable compound having a carboxyl group or an acid anhydride group thereof, an amino group or the like.

Among the above-mentioned polymerizable compounds, as the polymerizable compound having an epoxy group, for example, there may be mentioned an epoxycyclo$C_{5-8}$alkenyl (meth) acrylate such as epoxycyclohexenyl (meth) acrylate, glycidyl (meth)acrylate, and allyl glycidyl ether. As the compound having a hydroxyl group, for example, there may be mentioned a hydroxy$C_{1-4}$alkyl (meth)acrylate such as hydroxypropyl (meth)acrylate, and a $C_{2-6}$alkylene glycol (meth) acrylate such as ethylene glycol mono (meth) acrylate. As the polymerizable compound having an amino group, for example, there may be mentioned an amino$C_{1-4}$alkyl (meth)acrylate such as aminoethyl (meth)acrylate, a $C_{3-6}$alkenylamine such as allylamine, and an aminostyrene such as 4-aminostyrene or diaminostyrene. As the polymerizable compound having an isocyanate group, for example, there may be mentioned a polyurethane (meth) acrylate and vinyl isocyanate. As the polymerizable compound having a carboxyl group or an acid anhydride group thereof, for example, there may be mentioned an unsaturated carboxylic acid or anhydride thereof such as a (meth) acrylic acid or maleic anhydride.

As typical examples, the following combinations are included: a thermoplastic polymer having a carboxyl group or an acid anhydride group thereof, and an epoxy group-containing compound; particularly a (meth)acrylic polymer [e.g., a (meth)acrylic acid-(meth)acrylic ester copolymer] and an epoxy group-containing (meth)acrylate [e.g., an epoxycycloalkenyl (meth)acrylate, and a glycidyl (meth)acrylate]. Concretely, there may be used a polymer in which a polymerizable unsaturated group(s) is(are) incorporated in one or some of carboxyl groups of a (meth)acrylic polymer, for example, a(meth)acrylic polymer having in a side chain thereof a photo-polymerizable unsaturated group (s) introduced by allowing epoxy group (s) of 3,4-epoxycyclohexenyl methyl acrylate to react with one or some of carboxyl groups of a (meth)acrylic acid-(meth)acrylate copolymer (CYCLOMER-P, manufactured by Daicel Chemical Industries, Ltd.).

The introduction amount of the functional group (particularly the polymerizable group) that participates in (or being involved in) a curing reaction relative to the thermoplastic polymer is about 0.001 to 10 mol, preferably about 0.01 to 5 mol, and more preferably about 0.02 to 3 mol relative to 1 kg of the thermoplastic polymer.

The polymer (s) may be used in a suitable combination. That is, the polymer may comprise a plurality of polymers. The plurality of polymers may be capable of phase separation by spinodal decomposition from a liquid phase. Moreover, the plurality of polymers may be incompatible with each other. For a combination of a plurality of polymers, the combination of a first polymer with a second polymer is not particularly limited to a specific one, and a plurality of polymers (for example two polymers) incompatible with each other in the neighborhood of a processing temperature, may be used in a suitable combination. For example, when the first polymer is a styrenic polymer, the second polymer may be a cellulose derivative, a (meth)acrylic polymer, an alicyclic polyolefin, a polycarbonate, a polyester, and others. Moreover, for example, when the first polymer is a cellulose derivative, the second polymer may be a styrenic polymer, a (meth)acrylic polymer (in particular, a (meth)acrylic polymer having a polymerizable group), an alicyclic polyolefin, a polycarbonate, a polyester, and others. In the combination of a plurality of polymers, there may be used at least a cellulose ester (for example, $C_{2-4}$alkylcarboxylic acid ester of a cellulose such as a cellulose diacetate, a cellulose triacetate, a cellulose acetate propionate, or a cellulose acetate butyrate).

The phase-separation structure (the uneven surface having recesses and projections) generated by spinodal decomposition is finally cured with an actinic ray (e.g., an ultraviolet ray, an electron beam), heat, or other means to form a cured resin. Accordingly, for the base film comprising a plasticsuch asa poly(ethyleneterephthalate), the antiglare layer comprising the cured resin can also inhibit precipitation of a low molecular weight component (such as an oligomer) from the inside of the base film due to heat.

From the viewpoint of durability (abrasion resistance) after curing, at least one of the plurality of polymers, e.g., one of polymers incompatible with each other (in the combination of the first polymer with the second polymer, particularly both polymers) is preferably a polymer having a functional group that is reactive to the curable resin-precursor, in a side chain thereof.

The ratio (weight ratio) of the first polymer relative to the second polymer [the former/the latter] may be selected within the range of, for example, about 1/99 to 99/1, preferably about 5/95 to 95/5 and more preferably about 10/90 to 90/10, and is usually about 20/80 to 80/20, particularly about 30/70 to 70/30.

The polymer for forming a phase-separation structure may comprise the thermoplastic polymer or other polymers in addition to the above-mentioned two polymers incompatible with each other.

The glass transition temperature of the polymer maybe, for example, about -100°C to 250°C, preferably about 0°C to 200°C, and more preferably about 50°C to 180°C (for example, about 100°C to 170°C). The weight-average molecular weight of the polymer may be selected within the range of, for example, not more than 1,000,000, and preferably about 1,000 to 500,000.

(B) Curable resin-precursor

The curable resin-precursor may include various curable compounds having a reactive functional group to heat or an actinic ray (e.g., an ultraviolet ray, and an electron beam) and being capable of forming a resin (particularly a cured or a crosslinked resin) by curing or crosslinking with heat or an actinic ray. For example, as the resin-precursor, for example, a thermosetting compound or resin [a low molecular weight compound having an epoxy group, a polymerizable group, an isocyanate group, an alkoxysilyl group, a silanol group, or others (e.g., an epoxy polymer, an unsaturated polyester, a polyurethane, and a silicone polymer)], and a photo-curable compound that is curable with an actinic ray (such as ultraviolet ray) (e.g., an ultraviolet-curable compound such as a photo-curable monomer or oligomer). The photo-curable compound may be an EB (electron beam)-curable compound, or others. Incidentally, a photo-curable compound such as a photo-curable monomer, a photo-curable oligomer, or a photo-curable resin (or polymer) which may have a low molecular weight is sometimes simply referred to as "photo-curable resin".

The photo-curable compound may include, for example, a monomer and an oligomer (or a polymer, particularly a polymer having a low molecular weight). For example, the monomer can be classified into the following two groups: a monofunctional monomer, which has one polymerizable group, and a polyfunctional monomer, which has at least two polymerizable groups.

The monofunctional monomer may include, for example, a monofunctional vinyl monomer exemplified as the silicon-free vinyl component (B) in the anchor layer and a vinyl monomer (e.g., vinylpyrrolidone). The polyfunctional monomer mayinclude a polyfunctionalmonomer having about 2 to 8 polymerizable groups. The difunctional monomer may include, for example, a difunctional vinyl monomer exemplified as the silicon-free vinyl component (B) in the anchor layer. As the tri- to octa-functional monomer, there may be mentioned, for example, a polyfunctional vinyl monomer exemplified as the silicon-free vinyl component (B) in the anchor layer.

Examples of the oligomer or polymer may include a silicon-free vinyl oligomer exemplified as the silicon-free vinyl component (B) in the anchor layer, a silicone(meth)acrylate, and others. These(meth)acrylate oligomers orpolymers may comprise a copolymerizable monomer as exemplified in the paragraph of the (meth) acrylic polymer in the polymer component. These photo-curable compounds may be used alone or in combination.

Further, the curable resin-precursor may contain a fluorine atom or an inorganic particle in order to reduce the haze value, improve the strength of the layer, and increase the transparency or strength of the layer. The precursor containing a fluorine atom (fluorine-containing curable compound) may include fluorides of the above-mentioned monomer and oligomer, for example, a fluoroalkyl (meth)acrylate [e.g., perfluorooctylethyl (meth)acrylate and trifluoroethyl (meth)acrylate], a fluoro(poly)oxyalkylene glycol di(meth)acrylate [e.g., fluoroethylene glycol di(meth)acrylate and fluoropropylene glycol di(meth)acrylate], and a fluorine-containing epoxy polymer, a fluorine-containing polyurethane. The precursor containing an inorganic particle may include, for example, an inorganic particle having a polymerizable group on a surface thereof (e.g., a silica particle which has a surface modified with a silane coupling agent having a polymerizable group). As a nano-sized silica particle (or silica nanoparticle) having a polymerizable group on a surface thereof, for example, a polyfunctional hybrid UV-curing agent (Z7501) is commercially available from JSR Corporation.

The preferred curable resin-precursor includes a photo-curable compound curable in a short time, for example, an ultraviolet-curable compound (e.g., a monomer, an oligomer, and a resin which may have a low molecular weight) and an EB-curable compound. In particular, a resin-precursor having a practical advantage is an ultraviolet-curable resin. Further, in order to improve the durability in repeated use (hitting), the photo-curable resin preferably comprises a photo-curable compound having two or more functional groups (preferably about 2 to 10 functional groups, and more preferably about 3 to 8 functional groups), particularly, a polyfunctional (meth)acrylate [for example, a tri- or more-functional (particularly, tetra- to octa-functional) (meth) acrylate].

Furthermore, according to the present invention, the curable resin-precursor comprises a penta- to heptafunctional (meth)acrylate and a tri- to tetra-functional(meth)acrylatein combination. Theratio (weight ratio) of the former relative to the latter is about 100/0 to 10/90, preferably about 99/1 to 30/70, and more preferably about 90/10 to 50/50 (particularly about 80/20 to 40/60).

Moreover, for the combination of the polyfunctional (meth)acrylate and the above-mentioned fluorine-containing curable compound (particularly a monomer having a fluorine atom and a (meth)acryloyl group, such as a (meth) acrylate having a fluoroalkyl chain), the ratio of the fluorine-containing curable compound is, for example, about 0.01 to 5 parts by weight, preferably about 0.05 to 1 parts by weight, and more preferably about 0.1 to 0.5 parts by weight relative to 100 parts by weight of the polyfunctional (meth)acrylate.

The molecular weight of the curable resin-precursor is, allowing for compatibility to the polymer, not more than about 5000, preferably not more than about 2000, and more preferably not more than about 1000.

The curable resin-precursor may contain a curing agent depending on the variety. For example, a thermosetting resin may contain a curing agent such as an amine or a polyfunctional carboxylic acid, and a photo-curable resin may contain a photopolymerization initiator. As the photopolymerization initiator, there may be exemplified a conventional component, e.g., an acetophenone, a propiophenone, a benzyl, a benzoin, a benzophenone, a thioxanthone, an acylphosphine oxide, and others. The amount of the curing agent (such as a photo curing agent) relative to 100 parts by weight of the curable resin-precursor is about 0.1 to 20 parts by weight, preferably about 0.5 to 10 parts by weight, and more preferably about 1 to 8 parts by weight (particularly about 1 to 5 parts by weight), and may be about 3 to 8 parts by weight.

Further, the curable resin-precursor may contain a curing accelerator. For example, the photo-curable resin may contain a photo-curing accelerator, e.g., a tertiary amine (such as a dialkylaminobenzoic ester) and a phosphine photopolymerization accelerator.

Among at least one polymer and at least one curable resin-precursor, at least two components are used in such a combination as they are phase-separated with each other in the neighborhood of a processing temperature. The combination is not particularly limited to a specific one, and is usually a combination of a plurality of polymers or a combination of a polymer and a curable resin-precursor. The combination of the plurality of polymers is particularly preferred. When both components to be phase-separated have high compatibility, both components fail to generate effective phase separation during a drying step for evaporating the solvent, and as a result the layer obtained therefrom deteriorates functions as an anti-glare layer.

The polymer and the curable resin-precursor (or cured resin) may be compatible or incompatible with each other. When the polymer and the curable resin-precursor are incompatible with each other and are phase-separated, a plurality of polymers may be used as the polymer. When a plurality of polymer is used, at least one polymer needs only to be incompatible with the resin-precursor (or cured resin), and other polymer(s) may be compatible with the resin-precursor.

When the polymer comprises a plurality of polymers incompatible with each other to be phase-separated, the curable resin-precursor is used in combination with at least one polymer among a plurality of polymers incompatible with each other so that the precursor and the polymer can be compatible with each other in the neighborhood of a processing temperature. That is, when a plurality of polymers incompatible with each other comprises, for example, a first polymer and a second polymer, the curable resin-precursor needs only to be compatible with at least one of the first polymer and the second polymer, or may be preferably compatible with both polymer components. When the curable resin-precursor is compatible with both polymer components, at least two phases which are phase-separated are obtained, one phase comprises a mixture containing the first polymer and the curable resin-precursor as main components, the other phase comprises a mixture containing the second polymer and the curable resin-precursor as main components.

Specifically, when the plurality of polymers comprises a cellulose derivative and a(meth)acrylic polymer having a polymerizable group in combination and the curable resin-precursor comprises a polyfunctional (meth) acrylate, these polymers may be incompatible with each other and form a phase separation, the (meth)acrylic polymer having a polymerizable group and the polyfunctional (meth) acrylate may also be incompatible with each other and form a phase separation, and the cellulose derivative and the polyfunctional (meth) acrylate may be compatible with each other.

When the plurality of polymers and the curable resin-precursor to be selected have high compatibility with each other, the polymers or the polymer and the precursor fail to generate effectivephase separation among themselves during a drying step for evaporating the solvent, and as a result the layer obtained therefrom deterioratesfunctions as an anti-glare layer. The phase separability among the polymers or the precursor can be judged conveniently by visually conforming whether the residual solid content becomes clouded or not during a step of preparing a uniform solution with a good solvent to both components and gradually evaporating the solvent.

Further, the difference in the refraction index between the polymer and the cured or crosslinked resin, or the difference in the refraction index between the plurality of polymers (the first polymer and the second polymer) may, for example, be about 0.001 to 0.2, and preferably about 0.05 to 0.15.

In the spinodal decomposition, with the progress of the phase separation, the bicontinuous phase structure is formed. On further proceeding the phase separation, the continuous phase becomes discontinuous owing to its own surface tension to change into the droplet phase structure (e.g., an islands-in-the-sea structure containing independent phasessuch asball-likeshape, sphericalshape, discotic shape or oval-sphere shape). Therefore, an intermediate structure of the bicontinuous phase structure and the drop phase structure (i.e., a phase structure in a transitional state from the bicontinuous phase to the droplet phase) can also be formed by varying the degree of phase separation. The phase-separation structure in the anti-glare layer may be an islands-in-the-sea structure (a droplet phase structure, or a phase structure in which one phase is independent or isolated) or a bicontinuous phase structure (or a mesh structure), or may be an intermediate structure being a coexistent state of a bicontinuous phase structure and a droplet phase structure. The phase-separation structure allows a gently and finely uneven structure to be formed on the surface of thus obtained anti-glare layer after drying of the solvent.

The anti-glare layer having the uneven surface structure formed by phase separation in this manner has a haze which may be selected from the range of about 0.1 to 50% according to the purpose. The anti-glare layer has a haze of, for example, about 0.1 to 30%, preferably about 0.5 to 20%, and more preferably about 1 to 15% (particularly about 2 to 8%). For example, for the electronic paper, the anti-glare layer may have a haze of about 1 to 30%, preferably about 5 to 20%, and more preferably about 10 to 15%.

Further, the anti-glare layer having a phase-separation structure contains no fine particle which leads to scattering in the interior of the layer, differently from an anti-glare layer obtained by addition of a particle. Thus, the haze in the interior of the layer (the internal haze leading to scattering in the interior of the layer) is low, for example, about 0 to 1%, preferably about 0 to 0.8% (e.g., about 0.01 to 0.8%), and more preferably about 0 to 0.5% (e.g., about 0.1 to 0.5%). The internal haze can be determined by coating the uneven surface of the anti-glare layer with a polymer layer or pasting a smooth transparent film on the uneven surface of the anti-glare layer through a transparent adhesive layer so as to planarize the uneven surface of the anti-glare layer, and measuring a haze of the planarized matter.

In the phase-separation structure, it is advantageous from the viewpoint of forming the uneven surface structure and of improving the surface hardness that the structure is a droplet phase structure having at least an island domain. Incidentally, when the phase-separation structure comprising a polymer and the above-mentioned precursor (or cured resin) is an islands-in-the-sea structure, the polymer component may form a sea phase. It is however advantageous from the viewpoint of surface hardness that the polymer component forms island domains. The formation of the island domains can provide a finely uneven structure on the surface of thus obtained anti-glare layer after drying.

Further, the average distance between domains of the above-mentioned phase-separation structure usually has a substantial regularity or periodicity. For example, the average distance between domains (or phases) may be about 1 to 70 μm (e.g., about 1 to 40 μm), preferably about 2 to 50 μm (e.g., about 3 to 30 μm), and more preferably about 5 to 20 μm (e.g., about 10 to 20 μm).

The ratio (weight ratio) of the polymer relative to the curable resin-precursor is not particularly limited to a specific one and, for example, the polymer/the curable resin-precursor may be selected within the range of about 5/95 to 95/5. From the viewpoint of surface hardness, the ratio (weight ratio) is preferably about 5/95 to 60/40, more preferably about 10/90 to 50/50, andparticularlyabout 10/90 to 40/60. In particular, in the anti-glare layer containing a cellulose derivative as whole or part of the polymer, the ratio (weight ratio) of the polymer relative to the curable resin-precursor [the former/the latter] is, for example, about 10/90 to 80/20, preferably about 20/80 to 70/30, and more preferably about 30/70 to 50/50.

(2) Anti-glare layer containing particle

The anti-glare layer containing a particle has a particle-derived uneven structure formed by mixing a particle in the polymer component and/or the curable resin-precursor exemplified in the anti-glare layer having a phase-separation structure. The polymer component or curable resin-precursor preferably includes a (meth)acrylic polymerizable composition in terms of the transparency and mechanical properties. For example, a urethane (meth)acrylate is preferred.

The particle may include an organic fine particle and an inorganic fine particle. The polymer constituting the organic fine particle may include, for example, a thermoplastic polymer (e.g., an acrylic polymer such as a poly(methyl methacrylate), a polycarbonate, a styrenic polymer such as a polystyrene or a styrene-acrylonitrile copolymer, and a poly(vinyl chloride)), a crosslinked thermoplastic polymer [for example, a crosslinked polyolefin (e.g., a crosslinked polyethylene and a crosslinked polypropylene), a crosslinked styrenic polymer (e.g., a crosslinked polystyrene, a crosslinked polydivinylbenzene, a crosslinked polyvinyltoluene, and a crosslinked styrene-methyl methacrylate copolymer), and a crosslinked acrylic polymer (e.g., a crosslinked poly (methyl methacrylate))], and a thermosetting polymer (for example, a melamine polymer, a urea polymer, an aminobenzoguanamine polymer, a silicone polymer, an epoxy polymer, and a polyurethane). These organic fine particles may be used alone or in combination.

The inorganic compound for the inorganic fine particle may include a metal simple substance, a metal oxide, a metal sulfate (e.g., calcium sulfate and barium sulfate), a metal silicate (e.g., calcium silicate, aluminum silicate, magnesium silicate, and magnesium aluminosilicate), a metal phosphate(e.g., calcium phosphate and magnesium phosphate), a metal carbonate (e.g., magnesium carbonate, heavy calcium carbonate, and light calcium carbonate), a metal hydroxide (e.g., aluminum hydroxide, calcium hydroxide,and magnesium hydroxide), a silicon compound (e.g., a white carbon and a glass), and a natural mineral substance (e.g., a zeolite, a diatomaceous earth, a baked diatomaceous earth, an alumina, a talc, a mica, a kaolin, a sericite, a bentonite, a montmorillonite, a smectite, and a clay).

These particles maybe used alone or in combination. Among these particles, from the viewpoint of the transparency, the affinity with the polymer component or the curable resin-precursor, or others, the preferred particle includes a (crosslinked) styrenic particle, a (crosslinked) acrylic polymer particle, a polycarbonate particle, and others.

The shape of the particle is not particularly limited to a specific one. The shape of the fine particle may include a spherical form, an ellipsoidal form, a polygonal form (e.g., a polyangular-pyramid form, a cubic form, and a rectangular-prism form), a plate-like form, a rod-like form, an amorphous form, and others. In order to form a uniform uneven structure on the surface of the anti-glare layer, an isotropic form (e.g., a substantially spherical form) is preferred.

The refraction index of the particle can be selected depending on the species of the polymer component or the curable resin-precursor, and may be, for example, about 1.40 to 1.60, preferably about 1.42 to 1.59, and more preferably about 1.45 to 1.58.

The particle has an average particle size of, for example, about 0.1 to 10 μm, preferably about 1 to 8 μm, and more preferably about 2 to 6 μm (particularly about 3 to 5 μm).

The ratio of the particle relative to 100 parts by weight of the polymer component and/or the curable resin-precursor is, for example, about 1 to 50 parts by weight, preferably about 3 to 40 parts by weight, and more preferably about 5 to 30 parts by weight (particularly about 10 to 20 parts by weight).

The anti-glare layer containing the particle can be produced by a conventional process (such as melt-kneading or mixing with a solvent). Forexample, theanti-glarelayer may be produced according to a production process described in Japanese Patent Application Laid-Open Publication No. 6-18706.

According to the present invention, the anti-glare layer having a phase-separation structure among the above-mentioned anti-glare layers is particularly preferred in the view of uniform and smooth uneven structure, excellent anti-glareness, and inhibition of deterioration of the barrier layer even in taking up the lamination film in a roll state.

The anti-glare layer may contain various additives, for example, a stabilizer (e.g., an antioxidant and an ultraviolet absorber), a surfactant, a water-soluble polymer, a filler, a crosslinking agent, a coupling agent, a coloring agent, a flame retardant, a lubricant, a wax, a preservative, a viscosity modifier, a thickener, a leveling agent, and a defoaming agent.

The anti-glare layer may have a thickness (a thickness between a first side (a top of a projection in an uneven surface thereof) and a second side of the layer) of, for example, about 0.3 to 20 $\mu$m and preferably about 1 to 18 $\mu$m (e.g., about 3 to 16 $\mu$m), and usually has a thickness of about 5 to 15 $\mu$m (particularly about 7 to 13 $\mu$m). Other functional layers than the anti-glare layer each may have substantially the same thickness.

(Characteristics of lamination film)

The lamination film of the present invention has excellent gas barrier properties (in particular, barrier properties against water vapor). For example, the lamination film may have a moisture vapor transmission rate of not more than 1.5 g/ (m2·day) (e.g. , about 0.00001 to 1.5 g/ (m2·day)), preferably not more than 1.0 g/ (m2·day) (e.g., not more than 0.1 g/ (m2·day)), more preferably not more than 0.01g/(m2·day) (e.g., not more than 0. 005 g/(m2·day)), and particularly not more than 0.001 g/(m2·day) (e.g., about 0.0001 to 0.001 g/(m2·day)) under an atmosphere of a temperature of 40°C and a humidity of 90%RH. The lamination film of the present invention sometimes shows a moisture vapor transmission rate of substantially not more than the detection limit even if the film is subjected to the after-mentioned moisture vapor transmission test, and thus the film has extremely small barrier properties. Incidentally, the moisture vapor transmission rate may be measured by a common measuring apparatus [for example, "PERMATRAN", "AQUATRAN" (manufactured by MOCON)].

Moreover, the lamination film of the present invention also has an excellent transparency. The lamination film may have a total light transmittance of not less than 80% (e.g., about 80 to 99.9%), preferably not less than 82% (e.g., about 82 to 99%), and more preferably not less than 85% (e.g., about 85 to 95%) in accordance with JIS (Japanese Industrial Standards) K7105.

Further, the lamination film, comprising the anti-glare layer, of the present invention for an electronic device has an uneven surface structure and shows anti-glareness. In particular, the anti-glare layer having a finely uneven surface structure having minute raised and depressed regions in large quantities, corresponding to the above phase-separation structure, has a high transmitted image clarity and allows a sparkling-or flickering-subdued clear image to be displayed on a display screen of an electronic device.

Further, as described above, for the anti-glare layer having a phase-separation structure, in the phase-separation structure, the average distance between domains (two adjacent domains) substantially has regularity or periodicity. Therefore, the light being incident on the lamination film and transmitted through the film shows maximum (local maximum) of the scattered light at a specific angle away from the rectilinear transmitted light by Bragg reflection corresponding to the average distance between phases (or regularity of the uneven surface structure). That is, the lamination film comprising the anti-glare layer having a phase-separation structure isotropically transmits and scatters or diffuses an incident light, while the scattered light (transmitted scattered-light) shows maximum value of the light intensity at a scattering angle which is shifted from the scattering center [for example, at about 0.1 to 10°, preferably about 0.2 to 8°, more preferably about 0.3 to 5° (particularly about 0.5 to 3°)]. The use of the lamination film accordingly can eliminate sparkling (glare) on a screen image, because the scattered light through the uneven surface structure does not adversely affect the profile of rectilinear transmitted light.

The maximum value of the transmitted scattered light intensity was determined as follows: in the angle distribution profile of the scattered light intensity, even when the angle distribution profile has a separated peak, a shoulder-shaped peak or a flat-shaped peak, it was regarded that the scattered light intensity had a maximum value, and the angle was given as a peak angle.

The haze of the lamination film having the anti-glare layer may be selected from the range of about 0.1 to 50% and is, for example, about 0.1 to 40%, preferably about 2 to 35%, and more preferably about 3 to 30% (particularly about 5 to 25%).

The lamination film having the anti-glare layer has an image (transmitted image) clarity of, for example, about 10 to 70%, preferably about 15 to 60%, and more preferably about 20 to 50% (particularly about 25 to 45%) when an optical slit of 0.5 mm width is used. The lamination film has an image (transmitted image) clarity of, for example, about 10 to 70%, preferably about 20 to 60% and more preferably about 25 to 50% when an optical slit of 0.25 mm width is used.

The transmitted image clarity is a measure for quantifying defocusing or distortion of a light transmitted through a film. The transmitted image clarity is obtained by measuring a transmitted light from a film through a movable optical slit, and calculating amount of light in both a light part and a dark part of the optical slit. That is, when a transmitted light is defocused by a film, the slit image formed on the optical slit becomes thicker, and as a result the amount of light in the transmitting part is not more than 100%. On the other hand, in the non-transmitting part, the amount of light is not less than 0% due to leakage of light. The value C of the transmitted image clarity is defined by the following formula according to the maximum value M of the transmitted light in the transparent part of the optical slit, and the minimum value m of the transmitted light in the opaque part thereof.

$$[0140] \quad C(\%) = [(M-m)/(M+m)] \times 100$$

That is, the closer the value C comes to 100%, the lower the image defocusing depending on the lamination film becomes [Reference; Suga and Mitamura, TosouGijutsu, July, 1985].

The uneven surface structure of the lamination film having the anti-glare layer has a uniform and fine uneven structure in addition to the above-mentioned regularity. For a measuring method in accordance with JIS B0601, the uneven surface structure has an arithmetic average roughness Ra of , for example, about 0.005 to 0.5 μm, preferably about 0.01 to 0.4 μm, and more preferably about 0.03 to 0.3 μm (particularly about 0.05 to 0.25 μm). The uneven surface structure has an average spacing of concavo-convexes (Sm) of, for example, about 10 to 500 μm, preferably about 20 to 300 μm, and more preferably about 30 to 200 μm.

[Process for producing lamination film]

The lamination film of the present invention may be produced by a conventional process. Depending on the lamination (stacked or laminated) structure, the order of layer (stack or lamination) is not particularly limited to a specific one. When the lamination film comprises the functional layer, the anchor layer or the like may be formed after the functional layer (such as the anti-glare layer) is formed, or the functional layer (such as the anti-glare layer) may be formed after the anchor layer or the like is formed. In order to easily and continuously take up the resulting lamination film in a roll state, the process for producing the lamination film may comprise: forming the functional layer on a first side of the base film, and then forming the anchor layer, the barrier layer, the etching protection layer, and the transparent electroconductive layer, in this order, on a second side of the base film.

(Process for forming anti-glare layer having phase-separation structure)

When the anti-glare layer having a phase-separation structure is formed as the functional layer, the anti-glare layer can be produced, with the use of a liquid phase (or a liquid composition) containing the polymer, the curable resin-precursor and the solvent, through a phase-separating step for forming a phase-separation structure by spinodal decomposition from the liquid phase concurrent with evaporation of the solvent; and a curing step for curing the curable resin-precursor to form an anti-glare layer.

The phase-separation process usually comprises a step for applying (or coating) or casting (flow casting) a liquid mixture containing the polymer, the curable resin-precursor and the solvent (particularly a liquid composition such as a uniform solution) on the support; and a step for evaporating the solvent from the coating layer or casting layer to form a phase-separation structure having a regular or periodical average distance between phases. In a preferred embodiment, as the liquid mixture, there may be used a composition containing the thermoplastic polymer, the photo-curable compound, the photopolymerization initiator, and the solvent for dissolving the thermoplastic polymer and the photo-curable compound. The photo-curable component in a phase-separation structure formed by spinodal decomposition is cured with a light irradiation to obtain an anti-glare layer. In another preferred embodiment, as the liquid mixture, there may be used a composition containing the plurality of polymers incompatible with each other, the photo-curable compound, the photopolymerization initiator, and the solvent. The photo-curable component having a phase-separation structure formed by spinodal decomposition is cured with a light irradiation to obtain an anti-glare layer.

The solvent to be used in wet spinodal decomposition may be selected depending on the species and solubility of the polymer and the curable resin-precursor, and needs only to be a solvent for uniformly dissolving at least solid content (a plurality of polymers and curable resin-precursor(s),a reactioninitiator,andifnecessary, other additive(s)). As such a solvent, there may be mentioned, for example, a ketone (e.g., acetone, methyl ethyl ketone, methyl isobutyl ketone, and cyclohexanone), an ether (e.g., dioxane and tetrahydrofuran), an aliphatic hydrocarbon (e.g., hexane), an alicyclic hydrocarbon (e.g., cyclohexane), an aromatic hydrocarbon (e.g., toluene and xylene), a carbon halide (e.g., dichloromethane and dichloroethane), an ester (e.g., methyl acetate, ethyl acetate, and butyl acetate), water, an alcohol (e.g., ethanol, isopropanol, butanol, and cyclohexanol), a cellosolve (e.g., methyl cellosolve, ethyl cellosolve, and propylene glycol monomethyl ether (1-methoxy-2-propanol)), acellosolveacetate, asulfoxide (e.g., dimethylsulfoxide), and an amide (e.g., dimethylformamide and dimethyhlacetamide). Moreover, the solvent may be a mixed solvent.

Among these solvents, it is preferred to use a solvent having a boiling point of not lower than 100°C at an atmospheric pressure. Further, in order to form the finely and regularly uneven surface structure, the solvent preferably comprises at least two solvent components with different boiling points. Moreover, the boiling point of the solvent component having a higher boiling point is not lower than 100°C, usually about 100 to 200°C, preferably about 105 to 150°C and more preferably about 110 to 130°C. In particular, the solvent preferably comprises at least one solvent component having a boiling point of not lower than 100°C and at least one solvent component having a boiling point of lower than 100°C in combination. In the case of using such a mixed solvent, the solvent component having a lower boiling point generates a temperature difference between the upper and lower layers of the coating film due to evaporation, and the solvent component having a higher boiling point remains in the coating film resulting in keeping of fluidity.

The solvent (or solvent component) having a boiling point of not lower than 100°C at an atmospheric pressure may include, for example, an alcohol (e.g., a $C_{4-8}$alkyl alcohol such as butanol, pentyl alcohol, or hexyl alcohol), an alkoxy alcohol (e.g., a $C_{1-6}$alkoxy$C_{2-6}$alkyl alcohol such as methoxypropanol or butoxyethanol), an alkylene glycol (e.g., a $C_{2-4}$alkylene glycol such as ethylene glycol or propylene glycol), and a ketone (e.g., cyclohexanone). These solvents may be used alone or in combination. Among them, a $C_{4-8}$alkyl alcohol such as butanol, a $C_{1-6}$alkoxy$C_{2-6}$alkyl alcohol such as methoxypropanol or butoxyethanol, and a $C_{2-4}$alkylene glycol such as ethylene glycol are preferred.

The ratio of the solvent components with different boiling points is not particularly limited to a specific one. In the combination of a solvent component having a boiling point of not lower than 100°C (a first solvent component) with a solvent component having a boiling point lower than 100°C (a second solvent component), the ratio of the first solvent component relative to the second component (when each of the first and second solvent components comprises a plurality of components, the ratio is defined as a weight ratio of the total first solvent components relative to the total second solvent components) may be, for example, about 10/90 to 70/30, preferably about 10/90 to 50/50, and more preferably about 15/85 to 40/60 (particularly about 20/80 to 40/60).

Moreover, when a liquid mixture or a coating composition is applied (or coated) on a base film, a solvent which does not dissolve, corrode or swell the base film may be selected according to the kinds of the base film. For example, when a triacetylcellulose film is employed as the base film, tetrahydrofuran, methyl ethyl ketone, isopropanol, toluene or the like is used as a solvent for the liquid mixture or the coating composition and thus the lamination film can be formed without deteriorating properties of the film.

The concentration of the solute (the polymer, the curable resin-precursor, the reaction initiator, and if necessary, other additive(s)) in the liquid mixture can be selected within the range causing the phase separation and not deteriorating castability and coatability, and is, for example, about 1 to 80% by weight, preferably about 5 to 60% by weight, and more preferably about 15 to 40% by weight (particularly about 15 to 35% by weight).

The coatingmethodmay include a conventional manner, for example, a roll coater, an air knife coater, a blade coater, a rod coater, a reverse coater, a bar coater, a comma coater, a dip and squeeze coater, a die coater, a gravure coater, a microgravure coater, a silkscreen coater, a dipping method, a spraying method, and a spinner method. Among these methods, a bar coater or a gravure coater is used widely. If necessary, the coating composition may be applied a plurality of times.

The coating thickness of the solution may be, for example, about 10 to 200 μm, preferably about 15 to 100 μm, and more preferably about 20 to 50 μm.

After the liquid mixture is cast or applied, phase separation by spinodal decomposition can be induced by evaporating or removing the solvent at a temperature of lower than a boilingpoint of the solvent (e.g., a temperature lower than a boiling point of the solvent by about 1 to 120°C, preferably about 5 to 80°C, more preferably about 10 to 60°C, and particularly about 10 to 50°C). The evaporation or removal of the solvent may usually be carried out by drying, for example drying at an temperature of about 30 to 200°C (e.g., about 30 to 100°C), preferably about 40 to 120°C, and more preferably about 50 to 80°C according to the boiling point of the solvent.

In order to form the finely uneven surface structure, after casting or applying (or coating) the liquid composition on the base film, the coating film may be put in a dryer after allowing the coating film to stand for a predetermined time (e.g., for about 1 second to 1 minute, preferably about 3 to 30 seconds and more preferably about 5 to 20 seconds) at an ambient temperature or room temperature (e.g., about 0 to 40°C and pref erably about 5 to 30°C), instead of immediately putting the coating film in a dryer (such as an oven) for dryness. Moreover, the dry air flow rate is not particularly limited to a specific one. In the case where the air flow rate is too high, the coating film is dried and solidified before formation of the uneven structure. Accordingly, the dry air flow rate may be not higher than 50 m/minute (e.g., about 1 to 50 m/minute), preferably about 1 to 30 m/minute, and more preferably about 1 to 20 m/minute.

Such spinodal decomposition accompanied by evaporation of the solvent imparts regularity and periodicity to the average distance between domains of the phase-separation structure.

The phase-separation structure formed by spinodal decomposition can immediately be fixed by curing the precursor in the curing step. The curing of the precursor can be carried out with applying heat, light irradiation, or a combination of these methods depending on the species of curable resin-precursor. The heating temperature may be selected within the appropriate range (e.g., about 50 to 150°C) as far as having the phase-separation structure, or may be selected within the temperature range similar to that in the above-mentioned phase-separating step.

Light irradiation can be selected depending on the species of the photo-curable component or the like, and a light energy ray [e.g., radioactive ray (such as gamma ray or X-ray), ultraviolet ray, and visible ray], an electron beam or the like is usually available for light irradiation. The general-purpose light source for exposure is usually an ultraviolet ray irradiator. The ultraviolet ray irradiator may include, for example, a Deep UV lamp, a low-pressure mercury lamp, a high-pressure mercury lamp, a superhigh-pressure mercury lamp, a halogen lamp, and a laser light source (a light source such as a helium-cadmium laser or an excimer laser). The quantity of the irradiated light (irradiation energy) varies depending on the thickness of the coated layer. The quantity of the irradiated light may for example be about 50 to 10000 $mJ/cm^2$, preferably about 70 to 7000 $mJ/cm^2$, and more preferably about 100 to 5000 $mJ/cm^2$. If necessary, light irradiationmaybe carried out under an inert (or inactive) gas atmosphere.

(Process for forming anchor layer)

In the process for forming the anchor layer, the method for applying (or coating) the polymerizable composition is not particularly limited to a specific one, and the same method as the above-mentioned applying (or coating) method in the anti-glare layer is usable. After being applied, the composition may be subjected to a drying step if necessary. The drying may be performed, for example, at a temperature of about 50 to 150°C, preferably about 60 to 140°C, and more preferably about 70 to 130°C.

The polymerizable composition may be heated for curing depending on the species of the polymerization initiator. The polymerizable composition can usually be cured by irradiation with an actinic ray. As the actinic ray, heat and/or a light energy ray is available. In particular, the light energy ray is useful. The irradiation of the light energy ray may be carried out in the same manner as the above-mentioned irradiation used in the anti-glare layer.

When the lamination film comprises the anti-glare layer containing a particle, the hardcoat layer, and/or the low-refraction-index layer as the functional layer(s), each layer can be formed in the same manner as the anchor layer.

(Process for forming barrier layer)

The barrier layer may be formed by a conventional film-forming means (or method) without limitation as far as the means allows a thin film containing a metal or a metal compound to be formed. The film-forming means may include, for example, a physical vapor deposition (PVD) [for example, a vacuum deposition, a flash evaporation (or flash deposition), an electron beam deposition, an ion beam deposition, an ion plating (e.g., an HCD, an electron beam RF, and an arc discharge), a sputtering (e.g., a direct-current discharge, a radio-frequency (RF) discharge, and a magnetron), a molecular beam epitaxy, and a laser ablation], a chemical vapor deposition (CVD) [for example, a thermal CVD, a plasma CVD, an MOCVD (organic metal vapor-phase growth), and a photo-assisted CVD], an ion beam mixing, and an ion implantation. Among these film-forming means, a physical vapor deposition (such as a vacuum deposition, an ion plating, or a sputtering), a chemical vapor deposition, and others are widely used. A sputtering or a plasma CVD (in particular, a sputtering) is preferred.

Further, the etching protection layer or the transparent electroconductive layer can be formed in the same manner as the barrier layer. The etching protection layer comprising the cured product of the (meth)acrylic polymerizable composition can be formed in the same manner as the anchor layer or by a flash evaporation or other means.

(Etching treatment of transparent electroconductive layer)

The transparent electroconductive layer formed on the etching protection layer is partly removed by a conventional etching treatment, usually for the purpose of size adjustment or pattern formation. The etching treatment uses an acid or an alkali and is usually performed by immersing the lamination film in an acidic or alkaline solution. The acid contained in the acidic solution may include, for example, an organic acid (e.g., acetic acid) and an inorganic acid (e.g., hydrochloric acid, sulfuric acid, nitric acid, and phosphoric acid). The alkali contained in the alkaline solution may include, for example, an alkali metal hydroxide such as sodium hydroxide or potassium hydroxide. When the transparent electroconductive layer is an ITO layer, the layer is usually etched with a hydrochloric acid solution. The solution for the etching treatment has an acid or alkali concentration of, for example, about 1 to 30% by weight, preferably about 2 to 20% by weight, and more preferably about 3 to 10% by weight. The immersion time is, for example, about 10 seconds to 30 minutes, preferably about 20 seconds to 10 minutes, and more preferably about 30 seconds to 5 minutes (particularly about 40 seconds to 3 minutes). The temperature of the etching treatment is, for example, about 0 to 80°C, preferably about 10 to 60°C, and more preferably about 15 to 40°C. According to the present invention, the barrier layer is not deteriorated even if the etching treatment is carried out under these conditions; the moisture vapor transmission rate of the lamination film after the etching is, for example, not less than 80% (e.g., 80 to 100%), preferablynot less than 90% (e.g. , 90 to 100%), and more preferably not less than 99% (e.g., 99 to 100%) relative to the moisture vapor transmission rate of the film before the etching.

Themoisturevaportransmissionratecanbemeasured by a conventional calcium corrosion method. As the calcium corrosion method, a method described in Japanese Patent Application Laid-Open Publication No. 2006-119069, Japanese Patent Application Laid-Open Publication No. 2006-250816, Japanese Patent No. 4407466, or others may be used.

(Taking up in a roll state)

According to the present invention, even when the lamination film comprising the anti-glare layer having an uneven surface structure is taken up in a roll state (or rolled up) in the production step of the film, the deterioration of the barrier layer is inhibited. Thus, since the film comprising the functional layer or the anchor layer formed by coating canbe directly taken up continuously by a roll-to-roll system, the present invention achieves an efficient production of the film. For example, in the production of the film by a roll-to-roll system, the anti-glare layer and the anchor layer are formed by gravure coating, and the barrier layer, the etching protection layer and the transparent electroconductive layer are formed in sequence on the anchor layer by sputtering or other methods. Even when the lamination film of the present invention is wound up (or rolled up), for example, at a tensile strength of about 5 to 20 kgf (particularly about 7 to 15 kgf), the damage or deterioration of the barrier layer is inhibited. Specifically, the moisture vapor transmission rate of the film is less changed before and after the taking-up step (or the moisture vapor transmission rate of the film is hardly decreased after the taking-up step); the moisture vapor transmission rate of the lamination film after the taking-up step is, for example, not less than 80% (e.g., 80 to 100%), preferably not less than 90% (e.g., 90 to 100%), and more preferably not less than 99% (e.g., 99 to 100%) relative to that before the taking-up step. Further, even when the taken-up (or rolled) film is stored under a high temperature and humidity condition for a long period of time, the barrier layer can be prevented from deteriorating.

[Electronic device]

The electronic device of the present invention is provided with the lamination film as a gas barrier member. The electronic device may for example be a liquid crystal element, a thin-film solar cell, an electronic paper, and an organic EL device. Among these devices, the lamination film is particularly suitable for the electronic paper and the organic EL device in the respect that the lamination film has extremely high barrier properties against water vapor and excellent optical properties.

(Electronic paper)

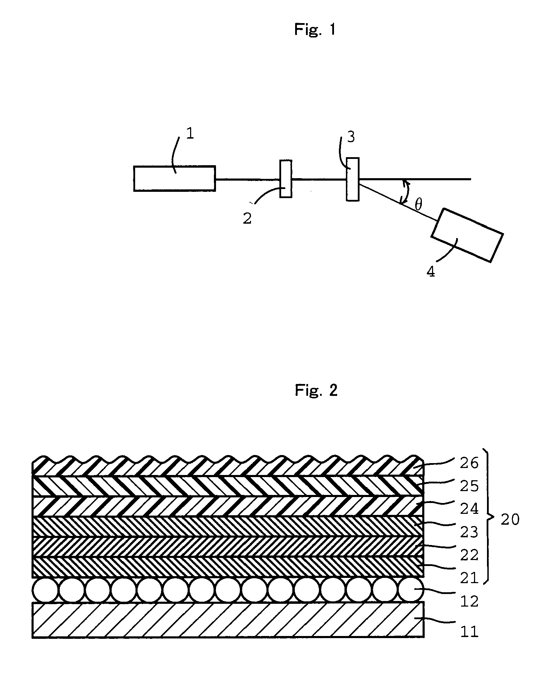

The electronic paper of the present invention comprises the lamination film disposed at a display side with respect to an ink layer (a display layer) thereof. Fig. 2 is a schematic cross-sectional view showing an electronic paper in accordance with an embodiment of the present invention. In this embodiment, the electronic paper comprises a thin film transistor (TFT) basal plate (or substrate) 11, an ink (display) layer 12 comprising a microcapsule or the like and being formed on the plate 11, and a lamination film 20 disposed on the ink layer 12. Further, the lamination film 20 comprises, in sequence, a transparent electrode 21 disposed in contact with the ink layer 12, an etching protection layer 22, a barrier layer23, an anchor layer 24, abasefilm25, andananti-glare layer 26.

In the electronic paper, an electrophoresis system, by which a pigment particle enclosed together with an oil component in the microcapsule is moved in an electric field, is adopted for the ink layer comprising the microcapsule. Without limitation to the electrophoresis system, for example, a quick-response liquid powder, a liquid crystal, an electrowetting, a chemical change, or other systems may be adopted for the ink layer. Since the lamination film of the present invention has excellent gas-barrier properties and is particularly suitable for an electronic paper provided with an ink layer for a system which easily deteriorates a display function due to moisture, e.g. , for electrophoresis or quick-response liquid powder, among these systems. As the ink layer for electrophoresis, for example, an electronic ink manufactured by Eink is being marketed; as the ink layer for quick-response liquidpowder, for example, a gyricon bead manufactured by Gyriconmedia is being marketed.

(Organic EL)

In the organic EL, a light-emitting layer constitutes a light-emitting diode (LED) composed of an organic compound; light is emitted by excitons generated by recombination of electrons and holes injected in the organic compound. A luminescent material to be used in the light-emitting layer may be a high molecular weight material of a polymeric molecule or a low molecular weight material. Moreover, the organic EL comprises a light-emitting element at each pixel; the light-emitting element is usually formed by a negative electrode (such as a metal)/an electron-injecting layer/an electron-transporting layer/a light-emitting layer/a hole-transporting layer/a hole-injecting layer/ a positive electrode (such as an ITO) /a basal plate (such as a glass plate or a transparent plastic plate). Further, the organic EL has a hetero structure; electrons and holes are trapped in separate layers. As a material for each layer, an organic matter (e.g., adiamine, anthracene, andametal complex) is usually employed. Each of the layers between these electrodes may have a thickness of several (a few) nm to several (a few) hundred nm as far as the layers have a thickness of about not more than 1 $\mu$m in total. The drive system may be an active matrix driving system or a passive matrix driving system; in the active matrix driving system, the organic EL is driven by disposing an active device such as a TFT (thin film transistor) at each pixel, and in the passive matrix driving system, a current is applied to stripe-shaped electrodes in exact timing to sequentially drive each pixel in the intersections of the electrodes. With respect to the electrodes, usually an ITO is employed as an anode, and Al, Mg, Ag, or a Li alloy is employed as a cathode. It is sufficient that the device structure is a hetero structure. The device structure may be a double hetero structure. A hole-transporting material may be, for example, oxadiazole·triazole. A hole-blocking layer may comprise a phenanthrene derivative. A dopant material may be DCM2 [4-(dicyanomethylene)-2-methyl-6-(p-dimethylaminostyryl)-4H-pyran], coumarin 6, perylene, and others.

The organic EL can be produced by a conventional process depending on the material constituting the element. For example, a thin-film light-emitting element comprising a low molecular weight compound can be produced by heating and evaporating a compound as a raw-material in a vacuum chamber. Specifically, a lowmolecular weight compound may be deposited in the form of a thin film having a thickness of about several (a few) nm to several (a few) hundred nm on a basal plate placed in a vacuum chamber; a slit may be used for separately coloring red, green, and blue. A light-emitting element comprising a high molecular weight compound may be produced by using a printing technique such as an inkjet technique, specifically, by forming an ink luminescent material into a thin film on a basal plate; a shadowmaskmaybe used for division of pixels. The organic EL of the present invention may be produced, for example, by pasting the light-emitting element formed on the basal plate in such a manner and the lamination film of the present invention.

EXAMPLES

The following examples are intended to describe this invention in further detail and should by no means be interpreted as defining the scope of the invention. Lamination films obtained in Examples and Comparative Examples were evaluated by the following items.

[Haze and total light transmittance]

The haze was measured using a haze meter (manufactured by Nippon Denshoku Industries Co., Ltd., the trade name "NDH-5000W") in accordance with JIS (Japanese Industrial Standards) K7136. The lamination film was disposed so as to face the uneven surface structure of the film toward a beam receiver, and the measurement of the haze was carried out.

[Surface structure]

The arithmetic average roughness Ra was measured in accordance with JIS B0601 by using a contacting profiling surface texture and contour measuring instrument (manufactured by Tokyo Seimitsu Co., Ltd., surfcom570A) under conditions as follows: a scanning range of 3 mm and number of times of 2.

[Image clarity]

The image clarity was measured in accordance with JIS K7105 with an image clarity measuring apparatus (manufactured by Suga Test Instruments Co., Ltd., the trade name "ICM-1T") provided with an optical slit (the slit width = 0.5 mm).

[Anti-glareness]

Each of the resulting lamination films was mounted on a surface of an E-ink electronic paper panel ("Kindle DX" sold by Amazon.com, Inc.), and the anti-glareness was visually observed based on the following criteria in the presence of ambient illumination.
A: No reflected glare (reflection)
B: Slight reflected glare (reflection)
C: Heavy reflected glare (reflection)

[Moisture vapor transmission rate (WVTR)]

The moisture vapor transmission rate (WVTR) was measured using a MOCON moisture vapor transmission rate measuring apparatus ("AQUATRAN" manufactured by MOCON) or by calcium corrosion method. The measurement condition is 40°C and a relative humidity of 90%RH.

Example 1

In a mixed solvent containing 24.3 parts by weight of methyl ethyl ketone (MEK), 4.8 parts by weight of 1-butanol (BuOH), and 5.1 parts by weight of 1-methoxy-2-propanol were dissolved 6.11 parts by weight of an acrylic polymer having a polymerizable unsaturated group (s) in a side chain thereof [a compound in which 3,4-epoxycyclohexenylmethyl acrylate is added to one or some carboxyl group(s) in a (meth) acrylic acid-(meth) acrylate copolymer; manufactured by Daicel Chemical Industries, Ltd., CYCLOMER-P(ACA) 320M, solid content: 44.2% by weight, solvent: 1-methoxy-2-propanol (MMPG) (boiling point: 119°C)], 0.8 parts by weight of a cellulose acetate propionate (acetylation degree = 2.5%, propionylation degree = 46%, number-average molecular weight in terms of polystyrene: 75,000; manufactured by Eastman, Ltd., CAP-482-20), 3.9 parts by weight of a polyfunctional acrylic UV-curable monomer (manufactured by DAICEL-CYTEC Company, Ltd., DPHA), 2.6 parts by weight of a polyfunctional acrylic UV-curable monomer (manufactured by DAICEL-CYTEC Company, Ltd., PETIA) , and 0.5 parts by weight of a photo initiator (manufactured by Ciba Japan K.K., IRGACURE 184). This solutionwas applied on a PET film (manufactured by Toyobo Co., Ltd., trade name "A4300", 188 $\mu$m thick) wound off a roll thereof by gravure coating so as to have a wet (WET) thickness of 30 $\mu$m, and dried by passing through a drying furnace at 70°C to form an about 10 $\mu$m thick coat layer having an uneven surface structure. Then, the coat layer was irradiated with ultraviolet ray at 300 mJ by a metal halide lamp. After the UV-curing treatment, the resulting film was rolled up to give a roll of an anti-glare f i lm having a hardcoat property and an uneven surface structure.

A urethane acrylate (manufactured by DAICEL-CYTEC Company, Ltd., "EBECRYL1290") as a silicon-free vinyl component, a silicone di(meth)acrylate (manufactured by DAICEL-CYTEC Company, Ltd., "EBECRYL350") as a silicone (meth)acrylate component, a polymerization initiator (manufactured by Ciba Japan K.K., "IRGACURE 184"), and methyl ethyl ketone were mixed in a ratio of 47/2/1/50 (weight ratio) to prepare a liquid coating composition. The liquid coating composition was applied on the other side of the resulting anti-glare film (that is, the side in which the anti-glare layer was not formed) by gravure coating while winding off the roll of the film, and dried bypassing through a drying furnace at 70°C, then irradiated and cured with UV at 300 mJ/cm$^2$ by a metal halide lamp to form an anchor layer having a thickness of 7 $\mu$m. Thereafter, the resulting film was rolled up to give a roll of a film having the anti-glare layer and the anchor layer.

An aluminum oxide [composition Al$_x$O$_y$] thin layer (an barrier layer having a thickness of 50 nm), a silicon-containing diamond-like carbon [composition Si$_x$C$_y$] thin layer (an etching protection layer having a thickness of 15 nm), and an ITO thin layer (a transparent electroconductive layer having a thickness of 30 nm) were sequentially formed in this order by sputtering on the anchor layer of the resulting film, having the anti-glare layer and the anchor layer, while winding off the roll of the film. Then, the resulting film was rolled up again at a tensile strength of about 10 kgf to produce a roll of a lamination film for an electronic device.

The characteristic evaluation results of the resulting lamination film are shown in Table 1. Moreover, the measurements of the moisture vapor transmission rate before and after rolling up the resulting lamination film are shown Table 2. Further, the resulting lamination film was immersed in a 4% by weight hydrochloric acid aqueous solution for one minute, then pulled out of the solution and washed with water in order to remove the acid. The measurements of the moisture vapor transmission rate of the lamination film before and after the acid immersion are shown in Table 3.

Example 2

A mixture composed of 50 parts by weight of a urethane acrylate monomer (manufactured by Shin-Nakamura Chemical Co., Ltd., trade name "U6HA"), 8 parts by weight of a polystyrene bead having an average particle size of 4 $\mu$m, and 2 parts by weight of a photopolymerization initiator (manufactured by Ciba Specialty Chemicals K.K., trade name "IRGACURE 184") was diluted with toluene to a solid content of 35% by weight to prepare a particle-dispersed liquid coating composition. The particle-dispersed composition was applied on a PET film (manufactured by Toyobo Co., Ltd. , trade name "A4300", 188 $\mu$m thick) wound off a roll thereof by gravure coating so as to have a wet thickness of 20 $\mu$m, and dried by passing through a drying furnace at 70°C to form an about 7 $\mu$m thick coat layer having an uneven surface structure. Then, the coat layer was irradiated with ultraviolet ray at 300 mJ by a metal halide lamp. After the UV-curing treatment, the resulting film was rolled up to give a roll of a film having an anti-glare layer. A lamination film for an electronic device was produced by forming an anchor layer, a barrier layer, an etching protection layer, and a transparent electroconductive layer on the resulting anti-glare film in the same manner as in Example 1. With respect to the resulting lamination film for an electronic device, the characteristic evaluation results are shown in Table 1, and the evaluation results of the moisture vapor transmission rate before and after the acid immersion treatment are shown in Table 3.

Table 1

|  | Example 1 | Example 2 |
|---|---|---|
| Total light transmittance (%) | 90.4 | 89.5 |
| Haze (%) | 14 | 20 |
| Internal haze (%) | 0.3 | 10 |
| Ra ($\mu$m) | 0.15 | 0.2 |
| Image clarity (0.5 mm slit) | 27 | 28 |
| Image clarity (0.25mm slit) | 29 | 30 |
| Anti-glareness | A | B |

From the results shown in Table 1, as a lamination film for an electronic device, the lamination film of Example 1 has excellent optical properties compared with the lamination film of Example 2.

Example 3

A lamination film for an electronic device was produced in the same manner as in Example 1 except that a titanium oxide [composition $TiO_2$] thin layer (an etching protection layer having a thickness of 15 nm) was formed by sputtering instead of the silicon-containing diamond-like carbon thin layer as the etching protection layer. With respect to the resulting lamination film for an electronic device, the evaluation results of the moisture vapor transmission rate before and after the acid immersion treatment are shown in Table 3.

Example 4

A silicon oxynitride [composition $Si_xOyN_z$] (a barrier layer having a thickness of 100 nm) was deposited on an anchor layer of a film, having an anti-glare layer and the anchor layer, obtained in the same manner as in Example 1 by plasma CVD while winding off the roll of the film. Then, the resulting film was rolled up at a tensile strength of about 10 kgf. Thereafter, a silicon-containing diamond-like carbon [composition $Si_xC_y$] thin layer (an etching protection layer having a thickness of 15 nm) and an ITO thin layer (a transparent electroconductive layer having a thickness of 30 nm) were sequentially formed in this order on the barrier layer of the film by sputtering while winding off the roll of the film. Then, the resulting film was rolled up again at a tensile strength of about 10 kgf to produce a roll of a lamination film for an electronic device. With respect to the resulting lamination film for an electronic device, the evaluation results of the moisture vapor transmission rate before and after the acid immersion treatment are shown in Table 3.

Example 5

A silicon nitride [composition $Si_xN_y$] (a barrier layer having a thickness of 60 nm) was deposited on an anchor layer of a film, having an anti-glare layer and the anchor layer, obtained in the same manner as in Example 1 by vacuum deposition while winding off the roll of the film. Then, the resulting film was rolled up at a tensile strength of about 10 kgf. Thereafter, a titanium oxide [composition $TiO_2$] thin layer (an etching protection layer having a thickness of 15 nm) was deposited on the barrier layer of the film by plasma CVD while winding off the roll of the film, and the resulting film was rolled up again at a tensile strength of about 10 kgf. Further, an ITO thin layer (a transparent electroconductive layer having a thickness of 30 nm) was formed on the etching protection layer of the film by sputtering while winding off the roll of the film, and the resulting film was rolled up at a tensile strength of about 10 kgf to give a roll of a lamination film for an electronic device. With respect to the resulting lamination film for an electronic device, the evaluation results of the moisture vapor transmission rate before and after the acid immersion treatment are shown in Table 3.

Example 6

A urethane acrylate (manufactured by DAICEL-CYTEC Company, Ltd., "EBECRYL1290"), a polymerization initiator (manufactured by Ciba Japan K.K., "IRGACURE 184"), and methyl ethyl ketone (MEK) were mixed in a ratio of 40/1/59 (weight ratio) to prepare a liquid coating composition. The liquid coating composition was applied on a PET film (manufactured by Toyobo Co., Ltd., trade name "A4300", 188 $\mu$m thick) wound off a roll thereof by gravure coating so as to have a wet (WET) thickness of 10 $\mu$m, and dried by passing through a drying furnace at 70°C to form a coat layer having a thickness of about 4 $\mu$m. Then, the coat layer was irradiated with ultraviolet ray at 300 mJ by a metal halide lamp. After the UV-curing treatment, the resulting film was rolled up to give a roll of a film having a hardcoat property. A lamination film for an electronic device was produced by forming an anchor layer, a barrier layer, an etching protection layer, and a transparent electroconductive layer on the resulting film in the same manner as in Example 1 except that the thickness of the anchor layer was 4 $\mu$m. With respect to the resulting lamination film for an electronic device, the evaluation results of the moisture vapor transmission rate before and after the acid immersion treatment are shown in Table 3.

Example 7

An anchor layer and a barrier layer were formed in the same manner as in Example 6 on the roll of the film having a hardcoat layer obtained in the same manner as in Example 6. Then, the resulting film was rolled up at a tensile strength of about 10 kgf. A urethane acrylate (manufactured by DAICEL-CYTEC Company, Ltd., "EBECRYL1290"), a polymerization initiator (manufactured by Ciba Japan K. K. , "IRGACURE 184") and methyl ethyl ketone (MEK) were mixed in a ratio of 4/0.1/96 (weight ratio) to prepare a liquid coating composition. The liquid coating composition was applied on the barrier layer of the film by gravure coating while winding off the roll of the film so as to have a wet (WET) thickness of 5 $\mu$m, and dried by passing through a drying furnace at 70°C to form a coat layer having a thickness of about 0.2 $\mu$m (200 $\mu$m). Then, the coat layer was irradiated with ultraviolet ray at 300 mJ by a metal halide lamp, and thus a roll of a film having an etching protection layer was produced. A transparent electroconductive layer was formed on the resulting roll of the film in the same manner as in Example 6, and thus a lamination film for an electronic device was produced. With respect to the resulting lamination film for an electronic device, the evaluation results of the moisture vapor transmission rate before and after the acid immersion treatment are shown in Table 3.

Example 8

A lamination film for an electronic device was produced in the same manner as in Example 1 except that a silicone hexa(meth)acrylate (manufactured by DAICEL-CYTEC Company,Ltd.,"EBECRYL1360")wasusedinstead of the silicone di (meth) acrylate as the coating composition for the anchor layer. With respect to the resulting lamination film for an electronic device, the evaluation results of the moisture vapor transmission rate before and after the acid immersion treatment are shown in Table 3.

Comparative Example 1

A mixture composed of 50 parts by weight of a urethane acrylate monomer (manufactured by Shin-Nakamura Chemical Co., Ltd., trade name "U6HA"), 8 parts by weight of a polystyrene bead having an average particle size of 4 $\mu$m, and 2 parts by weight of a photopolymerization initiator (manufactured by Ciba Specialty Chemicals K.K., trade name "IRGACURE 184") was diluted with toluene to a solid content of 35% by weight to prepare a particle-dispersed liquid coating composition. The particle-dispersed composition was applied on a PET film (manufactured by Toyobo Co. , Ltd., trade name "A4300", 188 $\mu$m thick) wound off a roll thereof by gravure coating so as to have a wet thickness of 20 $\mu$m, and dried by passing through a drying furnace at 70°C to form a coat layer having an uneven surface structure and having a thickness of about 7 $\mu$m. Then, the coat layer was irradiated with ultraviolet ray at 300 mJ by a metal halide lamp. After the UV-curing treatment, the resulting film was rolled up to give a roll of a film having an anti-glare layer.

An aluminum oxide [composition $Al_xO_y$] thin layer (a barrier layer having a thickness of 40 nm) and an ITO thin layer (a transparent electroconductive layer having a thickness of 30 nm) were sequentially formed in this order by sputtering on the other side of the resulting anti-glare film (that is, the side in which the anti-glare layer was not formed) while winding off the roll of the film. Then, the resulting film was rolled up again at a tensile strength of about 10 kgf to give a roll of a lamination film for an electronic device. With respect to the resulting lamination film for an electronic device, the evaluation results of the moisture vapor transmission rate before and after rollingup the film are shown Table 2, and the evaluation results of the moisture vapor transmission rate before and after the acid immersion treatment are shown in Table 3.

Comparative Example 2

An aluminum oxide [composition $Al_xO_y$] thin layer (a barrier layer having a thickness of 40 nm) and an ITO thin layer (a transparent electroconductive layer having a thickness of 30 nm) were sequentially formed in this order by sputtering on the PET film side (that is, the side in which the anti-glare layer was not formed) of the anti-glare film obtained in the same manner as in Example 1 while winding off the roll of the film. Then, the resulting filmwas rolled up again at a tensile strength of about 10 kgf to produce a roll of a lamination film for an electronic device. With respect to the resulting lamination film for an electronic device, the evaluation results of the moisture vapor transmission rate before and after the acid immersion treatment are shown in Table 3.

Table 2

| | WVTR before rolling up the film (g/ (m$^2$·day)) | WVTR after rolling up the film (g/(m$^2$·day)) |
|---|---|---|
| Example 1 | 0.0004 | 0.0004 |
| Comparative Example 1 | 0.1 | 0.5 |

As apparent from the results shown in Table 2, the film of Example shows no change in moisture vapor transmission rate between before and after the rolling-up of the film, while the film of Comparative Example shows deterioration in moisture vapor transmission rate after the rolling-up of the film.

Table 3

| | WVTR before acid immersion treatment (g/(m$^2$·day)) | WVTR after acid immersion treatment (g/(m$^2$·day)) |
|---|---|---|
| Example 1 | 0.0004 | 0.0004 |
| Example 2 | 0.0007 | 0.0008 |
| Example 3 | 0.0005 | 0.0004 |
| Example 4 | 0.05 | 0.05 |
| Example 5 | 0.07 | 0.07 |
| Example 6 | 0.0005 | 0.0007 |
| Example 7 | 0.0007 | 0.0006 |
| Example 8 | 0.0008 | 0.0007 |
| Comparative Example 1 | 0.14 | 5.7 |
| Comparative Example 2 | 0.17 | 5.2 |

As apparent from the results shown in Table 3, the films of Examples show less changes in moisture vapor transmission rate between before and after the acid immersion treatment, while the films of Comparative Examples show deterioration in moisture vapor transmission rate after the acid immersion treatment.

INDUSTRIAL APPLICABILITY

The lamination film of the present invention has excellent barrier properties against water vapor and high transparency and is usable for an electronic device (for example, a liquid crystal element, a thin-film solar cell, an organic EL device, an electronic paper, and touch panel) as a gas barrier member. In particular, the lamination film can subdue sparkling or flickering of a screen image without disturbance of the light transmission, thereby improving the visibility of the screen image, and can cut off an external water vapor. Thus, the lamination film is useful as a transparent electrode basal plate to be disposed at a display side with respect to an ink layer of an electronic paper (in particular, an electronic paper using an electronic ink, e.g., a electrophoresis system) or a transparent electrode basal plate to be disposed as a viewing-side film of an organic EL.

DESCRIPTION OF REFERENCE NUMERALS

| 1 | White parallel ray |
| 2 | ND Filter |
| 3 | Sample |
| 4 | Detector |
| 11 | TFT basal plate |
| 12 | Ink layer |
| 20 | Lamination film |
| 21 | Transparent electrode |
| 22 | Etching protection layer |
| 23 | Barrier layer |
| 24 | Anchor layer |
| 25 | Base film |
| 26 | Anti-glare layer |

**Claims**

1. A lamination film for an electronic device, the film comprising, in the following order:

   a base film comprising a transparent polymer,
   an anchor layer formed on at least a first side of the base film, the anchor layer comprising a cured product of a polymerizable composition containing at least one vinyl component selected from the group consisting of a vinyl monomer and a vinyl prepolymer,
   a barrier layer comprising a metal or a metal compound,
   an etching protection layer having an acid resistance or an alkali resistance, and
   a transparent electroconductive layer comprising an electroconductive inorganic compound,
   wherein the vinyl component contains at least one a first component selected from the group consisting of a silicone (meth)acrylate monomer and a silicone (meth)acrylate prepolymer.

2. A lamination film according to claim 1, wherein the vinyl component comprises:

   at least one first component selected from the group consisting of a silicone (meth)acrylate monomer and a silicone (meth)acrylate prepolymer and
   at least one second component selected from the group consisting of a silicon-free vinyl monomer and a silicon-free vinyl prepolymer.

3. A lamination film according to claim 2, wherein the second vinyl component comprises a urethane (meth)acrylate.

4. A lamination film according to claim 2 or 3, wherein the weight ratio of the first vinyl component relative to the second vinyl component is 1/99 to 30/70 as a ratio of the former/the latter.

5. A lamination film according to any one of claims 1 to 4, wherein the barrier layer is formed by a film-forming means selected from the group consisting of a vacuum deposition, an ion plating, a sputtering, and a chemical vapor deposition, and the barrier layer has a thickness of 20 to 300 nm.

6. A lamination film according to any one of claims 1 to 5, wherein the etching protection layer comprises a cured product of a (meth) acrylic polymerizable composition, a silicon carbide, a fluorine carbide, or a titanium oxide.

7. A lamination film according to any one of claims 1 to 6, wherein the electroconductive inorganic compound is a metal oxide.

8. A lamination film according to any one of claims 1 to 7, which further comprises a functional layer formed on a second side of the base film.

9. A lamination film according to claim 8, wherein the functional layer is an anti-glare layer.

**10.** A lamination film according to claim 9, wherein the anti-glare layer comprises one or a plurality of polymers and one or a plurality of cured products of curable resin-precursors, and has a phase-separation structure forming an uneven surface thereof.

**11.** A lamination film according to any one of claims 1 to 10, which is a film for disposing at a viewing side of an electronic device.

**12.** A process for producing a lamination film recited in any one of claims 1 to 10, which comprises forming an anchor layer on at least a first side of a base film by coating, and forming a barrier layer, an etching protection layer, and a transparent electroconductive layer in this order by physical or chemical vapor deposition.

**13.** A process according to claim 12, which comprises rolling up the film.

**14.** An electronic device provided with a lamination film recited in any one of claims 1 to 11.

Fig. 1

Fig. 2

<div style="text-align:center">**INTERNATIONAL SEARCH REPORT**</div>

| International application No. |
|---|
| PCT/JP2011/063286 |

**A. CLASSIFICATION OF SUBJECT MATTER**
*B32B9/00*(2006.01)i, *B32B15/082*(2006.01)i, *H05B33/04*(2006.01)i

According to International Patent Classification (IPC) or to both national classification and IPC

**B. FIELDS SEARCHED**

Minimum documentation searched (classification system followed by classification symbols)
B32B1/00-43/00, C23C14/00-14/58, H05B33/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2005-178137 A (Dainippon Printing Co., Ltd.),<br>07 July 2005 (07.07.2005),<br>claim 1; paragraphs [0016], [0018], [0021], [0026] to [0029], [0036], [0055] to [0056], [0059], [0061] to [0063]<br>(Family: none) | 1-9,11-14<br>10 |
| Y<br>A | JP 10-278167 A (Toppan Printing Co., Ltd.),<br>20 October 1998 (20.10.1998),<br>claim 1; paragraphs [0036], [0046]<br>(Family: none) | 1-9,11-14<br>10 |
| Y<br>A | JP 2007-216435 A (Tomoegawa Paper Co., Ltd.),<br>30 August 2007 (30.08.2007),<br>paragraph [0018]<br>(Family: none) | 8-9,11-14<br>10 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 October, 2011 (05.10.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/063286

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-306328 A  (Daicel Chemical Industries, Ltd.), 04 November 2004 (04.11.2004), claims 21, 25 & US 2004/0196558 A1 claims 21, 25 & DE 102004016726 A1     & KR 10-2004-0086815 A | 8-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004000920 A
- JP 2008033095 A
- JP 2007187746 A
- JP 2008074891 A
- JP 2009023284 A
- JP 3928989 B
- JP 4178339 B
- JP 2009221518 A
- JP 2001140608 A
- JP 2007213715 A
- JP 2010037648 A
- JP 2007185641 A
- JP 2008137888 A
- JP 2009076544 A
- JP 4165173 B
- JP 2004149884 A
- JP 6018706 A
- JP 2006119069 A
- JP 2006250816 A
- JP 4407466 B